(19) Europäisches Patentamt

European Patent Office

Office européen des brevets

(11) **EP 1 340 732 A1**

(12) **EUROPEAN PATENT APPLICATION**
published in accordance with Art. 158(3) EPC

(43) Date of publication:
**03.09.2003 Bulletin 2003/36**

(51) Int Cl.⁷: **C04B 35/581**

(21) Application number: **01997469.0**

(22) Date of filing: **22.11.2001**

(86) International application number:
**PCT/JP01/10255**

(87) International publication number:
**WO 02/042241 (30.05.2002 Gazette 2002/22)**

(84) Designated Contracting States:
**AT BE CH CY DE DK ES FI FR GB GR IE IT LI LU MC NL PT SE TR**

(30) Priority: **22.11.2000 JP 2000356539**

(71) Applicant: **Ibiden Co., Ltd.**
**Ogaki-shi, Gifu 503-0917 (JP)**

(72) Inventors:
• **HIRAMATSU, Yasuji**
**Ibi-gun, Gifu 501-0695 (JP)**
• **ITO, Yasutaka**
**Ibi-gun, Gifu 501-0695 (JP)**

(74) Representative: **Gillard, Marie-Louise**
**Cabinet Beau de Loménie**
**158, rue de l'Université**
**75340 Paris Cédex 07 (FR)**

(54) **ALUMINUM NITRIDE SINTERED BODY, METHOD FOR PRODUCING ALUMINUM NITRIDE SINTERED BODY, CERAMIC SUBSTRATE AND METHOD FOR PRODUCING CERAMIC SUBSTRATE**

(57) The purpose of the present invention is to provide a method for manufacturing a ceramic substrate hardly causing cracks and damages and the like attributed to pushing pressure and the like since the strength of the above-mentioned ceramic substrate is higher than that of a conventional one even in the case of manufacturing a large size ceramic substrate capable of placing a semiconductor wafer with a large diameter and the like. The present invention is to provide a method for manufacturing a ceramic substrate having a conductor formed on the surface thereof or internally thereof, including the steps of: firing a formed body containing a ceramic powder to produce a primary sintered body; and performing an annealing process to the primary sintered body at a temperature of 1400°C to 1800°C, after the preceding step.

**Description**

Technical Field

The present invention relates to an aluminum nitride sintered body to be employed mainly as an apparatus for semiconductor production and inspection such as a hot plate (a ceramic heater), an electrostatic chuck, a chuck top plate for a wafer prober and a manufacturing method thereof, and also a ceramic substrate including the aluminum nitride sintered body as a material and a manufacturing method thereof.

Background Art

In an etching apparatus, a semiconductor production and inspection apparatus including a chemical vapor deposition apparatus and the like, a heater using a substrate made of a metal such as a stainless steel, an aluminum alloy and the like, a chuck top plate for a wafer prober and so on have conventionally been employed.

Nevertheless, such a heater made of a metal has the following problems.

At first, since it is made of a metal, the thickness of a heater plate has to be as thick as about 15 mm. Because in the case of a thin metal plate, thermal expansion attributed to heating causes warp or strains and the like to result in breaks and inclination of a semiconductor wafer put on the metal plate. However, in case the thickness of the heater plate is made thick, it causes a problem that the heater becomes heavy and bulky.

Further, the temperature of a face for heating an object to be heated such as a semiconductor wafer (hereinafter, referred to as a heating face) is controlled by changing the voltage and the electric current applied to a resistance heating element, and in the case the metal plate is thick, the temperature of the heater plate cannot promptly follow the change of the voltage and the electric current, to result in a problem of the difficulty of temperature control.

Therefore, the publication of JP Kokai Hei 4-324276 discloses a hot plate employing aluminum nitride, which is a non-oxide ceramic having a high thermal conductivity and strength, as a substrate, having resistance heating elements and conductor-filled through holes of tungsten formed at the aluminum nitride substrate and comprising Nichrom wires connected with a solder to them as external terminals.

In such a hot plate, since a ceramic substrate with a high mechanical strength even at a high temperature is used, the thickness of the ceramic substrate can be made thin to lower the thermal capacity and as a result, the temperature of the ceramic substrate become capable of promptly responding to the change of the voltage and the electric current.

Disclosure of the Invention

However, recently, along with the tendency of enlargement of the diameter of a semiconductor wafer, the size of the ceramic substrate to be employed for manufacture of such a semiconductor device becomes large and in order to avoid crack and damage formation when pushing pressure is applied to the ceramic substrate, a ceramic substrate with a further high strength is required, however, presently, no ceramic substrate having such a high strength is made available.

The present invention is achieved to solve the above-mentioned problems and aims to provide an aluminum nitride sintered body having a higher strength than that of conventional ones, a method for manufacturing it, and a ceramic substrate containing the aluminum nitride sintered body as a material, and a method for manufacturing it.

Inventors of the present invention have enthusiastically made investigations to achieve the above-mentioned purposes and found that an aluminum nitride sintered body with a high strength and a ceramic substrate containing the aluminum nitride sintered body as a material can be obtained by producing a formed body containing a ceramic powder, degreasing and firing the formed body to once produce a primary sintered body and then subjecting the primary sintered body to anneal ing treatment at a temperature of 1400°C to 1800°C.

That is, a ceramic substrate of a first aspect of the present invention is a ceramic substrate having a conductor formed on a surface thereof, or internally thereof, wherein a bending strength thereof is 350 MPa or more.

The aluminum nitride sintered body of the first aspect of the present invention is an aluminum nitride sintered body, wherein a bending strength thereof is 350 MPa or more.

In the first aspect of the present invention, since the bending strength of the ceramic substrate (the aluminum nitride sintered body) is as high as about 350 MPa or more, consequently, in the case a large size ceramic substrate capable of placing a semiconductor wafer with large diameter thereon is manufactured, thus, even if pushing pressure and the like is applied to the ceramic substrate at a high temperature, cracking or damaging attributed to the pushing pressure does not take place easily and also since grains are firmly bonded to one another, coming-off of particle does not take place easily. Consequently, the ceramic substrate is suitable to be used for various purposes for such as a chuck top plate for a wafer prober, a probe card, a hot plate, an electrostatic chuck and the like.

In this specification, the primary sintered body means the one obtained by sintering a formed body containing a ceramic powder (an aluminum nitride powder) but not subjected to the annealing treatment. The one simply called as a sintered body in the present invention, therefore, means the one obtained by subjecting the primary sintered body to the annealing treatment. The phrase, at a high temperature, means a temperature of 150°C or more in this specification.

The above-mentioned ceramic substrate can be manufactured by subjecting the above-mentioned primary sintered body obtained by sintering a formed body to annealing treatment in temperature condition of 1400°C to 1800°C.

A ceramic substrate of a second aspect of the present invention is a ceramic substrate having a conductor formed on a surface thereof, or internally thereof, wherein a grain composing the surface thereof has round shape.

An aluminum nitride sintered body of the second aspect of the present invention is an aluminum nitride sintered body wherein a grain composing the surface thereof has round shape.

As described above, the second aspect of the present invention is the ceramic substrate (the aluminumnitride sintered body) whose surface is composed of round grains.

Such round grains can be formed by subjecting a primary sintered body produced by firing beforehand to annealing treatment at a high temperature. At the time when primary sintered body is manufactured at first, angular grains are formed. However, if annealing treatment is carried out, for example, at 1400°C to 1800°C, the grains in surface of the ceramic substrate change tobe round. Incidentally, in this case, the word, "round", means the state having no angular portion and in mathematics terms, grains are respectively composed of curved faces which can be differentiated or partially differentiated.

That indicates molecules in the grains move and, it is presumed that: firing in appropriate conditions causes molecule movement (for example, volumetric diffusion) which promotes sintering, and that results in a formation of a dense structure body and moderation of strains of the structure body; and consequent cancellation of the drop of the strength attributed to the moderation of strains enhances the strength of the ceramic substrate.

Accordingly, the ceramic substrate can suitably be used for various purposes such as a chuck top plate for a wafer prober, a probe card, a hot plate, an electrostatic chuck and the like.

Whether grains are round or not can be judged by cutting a ceramic substrate and observing a scanning electron microscopic (SEM) photograph of a cross-section including the surface of the ceramic substrate. Practically, the grains having curved faces in the ranges of 0.5 $\mu$m or wider width in the vicinity of portions where ridgelines are supposed to be formed are defined as round grains in this specification.

A ceramic substrate of a third aspect of the present invention is a ceramic substrate having a conductor formed on a surface thereof, or internally thereof, wherein the ceramic substrate has a content of a rare earth element gradually increasing toward the vicinity of the surface part from the inside.

An aluminum nitride sintered body of a third aspect of the present invention is an aluminum nitride sintered body wherein the aluminum nitride sintered body has a content of a rare earth element gradually increasing toward the vicinity of the surface part from the inside.

The rare earth elements are generally added as sintering aids. Along with proceeding of the sintering, sintering aids are gradually discharged to the outside of the system of the sintered body. Accordingly, along with the proceeding of the sintering, the sintering aids move from the center of the sintered body toward the surface. Further, above-mentioned annealing treatment causes larger change of the concentration attributed to the movement of the rare earth element and thus, the content of the rare earth elements in the ceramic substrate (the aluminum nitride sintered body) after the annealing treatment increases toward the vicinity of the surface part.

In the ceramic substrate of the present invention, for example, in the case of manufacturing a disk-like ceramic substrate, the ratio of the concentration at the center in the thickness direction of the substrate to the concentration near the surface of the substrate, that is, the center concentration/surface concentration ratio is within a range of 0 or more and 0.5 or less.

Accordingly, a ceramic substrate having such rare earth element distribution has generally been subjected to annealing treatment in conditions described for the first aspect of the present invention and the mechanical characteristics such as the strength and the like are improved and even if the pushing pressure is applied to the ceramic substrate at a high temperature, cracks and damages are not caused easily. As a result, the ceramic substrate is suitable to be employed for various purposes for such as a chuck top plate for a wafer prober, a probe card, a hot plate, an electrostatic chuck and the like.

Further, the bending strength of an aluminum nitride substrate (an aluminum nitride sintered body) manufactured by adding yttria ($Y_2O_3$) as the above-mentioned rare earth element, as a sintering aid, to aluminum nitride is preferably 350 MPa or more, further preferably 400 MPa or more. It is because aluminum nitride has the highest thermal conductivity and is the most preferable ceramic material, and yttria ($Y_2O_3$) is generally employed as a sintering aid for aluminum nitride. It is also because if the bending strength of the manufactured aluminum nitride substrate (the aluminum nitride sintered body) is 400 MPa or more, cracks and damages attributed to pushing pressure are not caused easily and coming-off of particle also does not take place easily.

Incidentally, other than aluminum nitride, the similar effect of the annealing treatment can be observed in the case of silicon nitride and the annealing treatment to the silicone nitride makes it possible to realize the bending strength of 400 MPa or more.

A method for manufacturing a ceramic substrate of a fourth aspect of the present invention is a method for manufacturing a ceramic substrate having a conductor formed on a surface thereof, or internally thereof, comprising the steps of: firing a formed body containing a ceramic powder to produce a primary sintered body; and performing an annealing process to the primary sintered body at a temperature of 1400°C to 1800°C, after the preceding step.

A method for manufacturing an aluminum nitride sintered body of a fourth aspect of the present invention is a method for manufacturing an aluminum nitride sintered body, containing the steps of : firing a formed body containing an aluminum nitride powder to produce a primary sintered body; and performing an annealing process to said primary sintered body at a temperature of 1400°C to 1800°C, after the preceding step.

The method for manufacturing a ceramic substrate (an aluminum nitride sintered body) of the present invention comprises steps of producing a primary sintered body by firing and then subjecting the primary sintered body to annealing treatment at a temperature of 1400°C to 1800°C. Consequently, molecular movement (for example, volumetric diffusion) is caused so as to promote sintering, and at the same time, strains of the primary sintered body are moderated to result in excellency in the mechanical characteristics such as the bending strength and the like thereof.

The bending strength is generally improved by about 5 to 50% as compared with that before the annealing treatment.

Further, even if it has a large size, a ceramic substrate manufactured in such conditions is not easily cracked or broken by pushing pressure at a high temperature. Accordingly, the ceramic substrate is suitable to be used for various purposes for such as a wafer prober (a chuck top plate for a wafer prober) a probe card, a hot plate, an electrostatic chuck and the like.

Brief Description of Drawings

Fig. 1 is a bottom face view schematically showing a hot plate, which is one example of a ceramic substrate of the present invention, having resistance heating elements on the bottom face.

Fig. 2 is a partially enlarged cross-sectional view schematically showing a part of the hot plate shown in Fig. 1.

Fig. 3 is a cross-sectional view schematically showing a supporting case to fit the hot plate shown in Fig. 1 therein.

Fig. 4 is a partially enlarged cross-sectional view schematically showing a hot plate, which is another example of a ceramic substrate of the present invention, having resistance heating elements embedded therein.

Fig. 5(a) is a cross-sectional view schematically showing an electrostatic chuck, which is one example of a ceramic substrate of the present invention. Fig. 5(b) is a cross-sectional view along the A-A line of the electrostatic chuck shown in Fig. 5(a).

Fig. 6 is a horizontal cross-sectional view schematically showing the shape of another electrostatic electrode constituting an electrostatic chuck, which is one example of a ceramic substrate of the present invention.

Fig. 7 is a horizontal cross-sectional view schematically showing the shape of another electrostatic electrode constituting an electrostatic chuck, which is one example of a ceramic substrate of the present invention.

Fig. 8 is a partially enlarged figure schematically showing a wafer prober, which is one example of a ceramic substrate of the present invention.

Fig. 9 is a planar view of an electrostatic chuck shown in Fig. 8.

Fig. 10 is a cross-sectional view along the A-A line of the electrostatic chuck shown in Fig. 8.

Fig. 11(a) to (d) is a cross-sectional view schematically showing a part of manufacturing process of a hot plate, which is one example of a ceramic substrate of the present invention, having resistance heating elements at the bottom.

Fig. 12(a) to (d) is a cross-sectional view schematically showing a part of manufacturing process of a hot plate, which is one example of a ceramic substrate of the present invention, having resistance heating elements embedded therein.

Fig. 13(a) is an enlarged photograph showing the surface state of a ceramic substrate which is not yet subjected to the annealing treatment, (b) is an enlarged photograph of a cross-sectional view thereof.

Fig. 14(a) is an enlarged photograph showing the surface state of a ceramic substrate which is subjected to the annealing treatment, (b) is an enlarged photograph of a cross-sectional view thereof.

Fig. 15 is an electron microscopic photograph of the inner portion of a ceramic substrate subjected to the annealing treatment.

Fig. 16 is an electron microscopic photograph of the surface of a ceramic substrate subjected to the annealing treatment.

Fig. 17 is an EPMA image of the surface of a ceramic substrate subjected to the annealing treatment.

Explanation of Symbols

| | |
|---|---|
| 9 | silicon wafer |
| 10, 20 | hot plate |
| 11, 21 | ceramic substrate |
| 12, 22 | resistance heating element |
| 13, 23 | external terminal |
| 14 | bottomed hole |
| 15 | through hole |
| 16 | lifter pin |
| 17 | thermocouple |
| 25 | through hole |
| 27 | blind hole |
| 28 | conductor-filled through hole |
| 30 | supporting case |
| 30a | coolant outlet |
| 32 | guide pipe |
| 35 | heat insulator |
| 37 | pressing metal tool |
| 38 | bolt |
| 39 | coolant inlet |
| 130 | solder paste layer |
| 170 | socket |

Detailed Description of the Invention

Hereinafter, a ceramic substrate of the present invention will be described. Incidentally, an aluminum nitride sintered body is one of materials constituting a ceramic substrate of the present invention and contained in a material of the ceramic substrate to be described hereinafter, so that description of only an aluminum nitride sintered body itself will be omitted.

Any ceramic substrate of a first to a third aspects of the present invention is a ceramic substrate having a conductor on the surface thereof or internally thereof and in the case a resistance heating element as the above-mentioned conductor is formed, the above-mentioned ceramic substrate functions as a hot plate and in the case the ceramic substrate has an electrostatic electrode as the conductor embedded therein, the above-mentioned ceramic substrate functions as an electrostatic chuck.

Further in the case a chuck top conductor layer is formed on the surface of the above-mentioned ceramic substrate and a guard electrode and/or a ground electrode are/is embedded internally of the ceramic substrate, the above-mentioned ceramic substrate functions as a wafer prober.

These practical embodiments will be described in details later.

A ceramic substrate of a first aspect of the present invention is characterized in that the substrate has a bending strength of 350 MPa or more.

A ceramic substrate of a second aspect of the present invention is characterized in that the shape of grains composing the surface of the substrate is round.

A ceramic substrate of a third aspect of the present invention is characterized in that the substrate has a content of a rare earth element gradually increasing toward the vicinity of the surface part.

The respective ceramic substrates of the first to the third aspects of the present invention are not particularly limited other than the above-mentioned constitutional factors as long as they are ceramic substrates satisfying the above-mentioned constitutional factors.

Further, since a ceramic substrate manufactured by a ceramic substrate manufacturing method of the present invention to be described later satisfies the constitutional factors of the ceramic substrate of the above-mentioned first to the third aspects of the present invention, hereinafter, as an embodiment of the present invention, a ceramic substrate manufactured by a ceramic manufacturing method of the present invention is exemplified for the description.

Hereinafter, the ceramic substrate manufactured by the ceramic manufacturing method of the present invent ion is referred simply as to a ceramic substrate of the present invention.

A ceramic material composing the ceramic substrate of the present invention is not particularly limited, and examples thereof include, for example, a nitride ceramic, a carbide ceramic, an oxide ceramic and the like.

Examples of the above-mentioned nitride ceramic include metal nitride ceramics such as aluminum nitride, silicon nitride, boron nitride, titanium nitride and the like.

Further, examples of the above-mentioned carbide ceramic, include metal carbide ceramics such as silicon carbide, zirconium carbide, titanium carbide, tantalum carbide, tungsten carbide and the like.

Examples of the above-mentioned oxide ceramic include metal oxide ceramics such as alumina, zirconia, cordierite, mullite and the like.

These ceramics may be used alone or in combination of two or more of them.

Among these ceramics, nitride ceramics and carbide ceramics are preferable as compared with oxide ceramics, because of a higher thermal conductivity.

Further, among the nitride ceramics, aluminum nitride is most preferable. Because the thermal conductivity is highest, that is, 180 W/m·K.

The above-mentioned ceramic material desirably contains a sintering aid. As the above-mentioned sintering aid, for example, alkali metal oxides, alkaline earth metal oxides, rare earth metal oxides and the like can be exemplified. Among these sintering aids, the rare earth metal oxides are preferable and $Y_2O_3$ is especially preferable. These content is preferably 0.1 to 10 % by weight.

The ceramic substrate of the present invention preferably has the lightness of N6 or less on the basis of the regulations of JIS Z 8721. It is because those having such lightness are excellent in heat radiation quantity and shielding property. Further, it is made possible to accurately measure the surface temperature of such a ceramic substrate by a thermo-viewer.

The lightness N is expressed as the symbols of N0 to N10 defined by setting the lightness of ideal black to be 0 and the lightness of ideal white to be 10 and dividing the respective colors into 10 grades so as to make the sensible lightness of the respective colors be at equal degrees between the lightness of black and the lightness of white.

The actual measurement is carried out by comparison with the color chips corresponding to N0 to N10 and in this case, the numeral value of the first decimal place is set to be 0 or 5.

The ceramic substrate having such characteristics can be obtained by adding 100 to 5000 ppm of carbon in the ceramic substrate. There are types of carbon, amorphous one and crystalline one. The amorphous carbon can suppress the drop of the volume resistivity of the ceramic substrate at a high temperature and the crystalline carbon can suppress the drop of the thermal conductivity of the ceramic substrate at a high temperature, so that types of carbon can properly be selected depending on the purposes of the substrate to be manufactured.

The amorphous carbon can be obtained, for example, by firing hydrocarbons consisting of only C, H, and O, preferably, saccharides, in air; and as the crystalline carbon, a graphite powder and the like can be employed.

Further, after acrylic resin is thermally decomposed in an inactive atmosphere, the resulting material is heated and pressurized to obtain carbon and, further, the degree of the crystallinity (the non-crystallinity) can be adjusted by changing the acid value of the acrylic resin.

The bending strength of the above-mentioned ceramic substrate is preferably 350 MPa or more, more preferably 400 MPa or more.

The method for obtaining such a ceramic substrate with high strength is not particularly limited, however, as described above, such a ceramic substrate can be manufactured by producing a primary sintered body which is going to be a ceramic substrate by firing and then subjecting the primary sintered body to annealing treatment in temperature condition from 1400°C to 1800°C. At the time of producing the primary sintered body, it is preferable to add a rare earth element as a sintering aid to raw material powders. It is because sintering is promoted easily and a dense body with a high strength can be formed.

The strength of the ceramic substrate is preferably 400 MPa or more. It is to further increase the strength of the ceramic substrate. Such a ceramic substrate with high strength can be obtained by subjecting a fired primary sintered body to annealing treatment at a temperature of 1600 to 1800°C for 0.5 to 10 hours in vacuum or atmosphere of an inert gas (nitrogen, argon and the like).

The ceramic substrate comprises grains with round shape composing the surface thereof and has the content of rare earth element gradually increasing toward the outer rim part.

Such grains with the round shape are supposedly formed in a manner attributable to movement of the molecules which promotes sintering, caused by the annealing treatment. Owing to the molecule movement, a further dense structure body can be obtained and the strains of the structure body are moderated and the drop of the strength attributed to the strains is suppressed to result in a ceramic substrate with high strength.

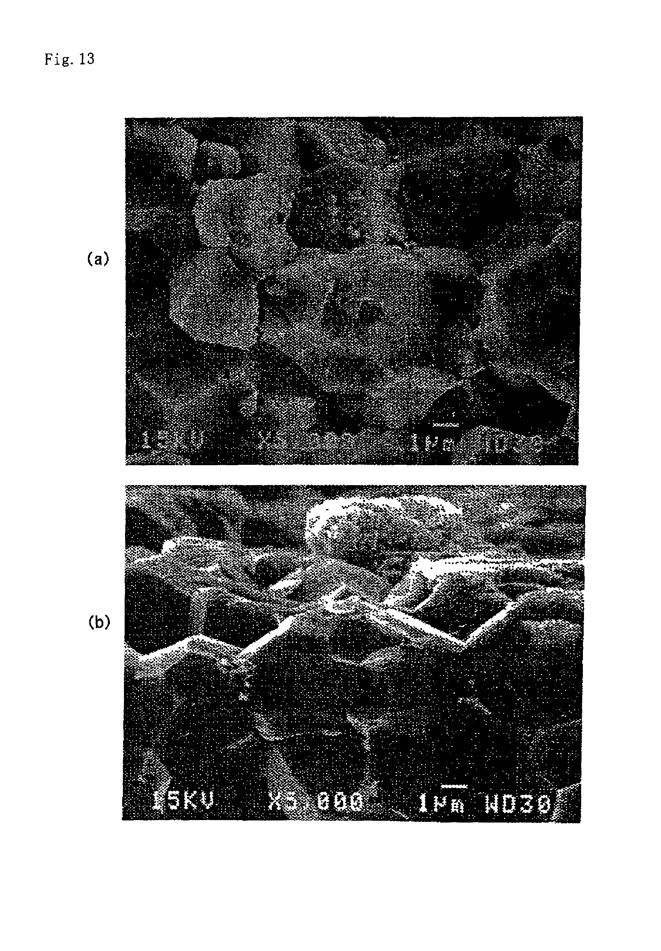

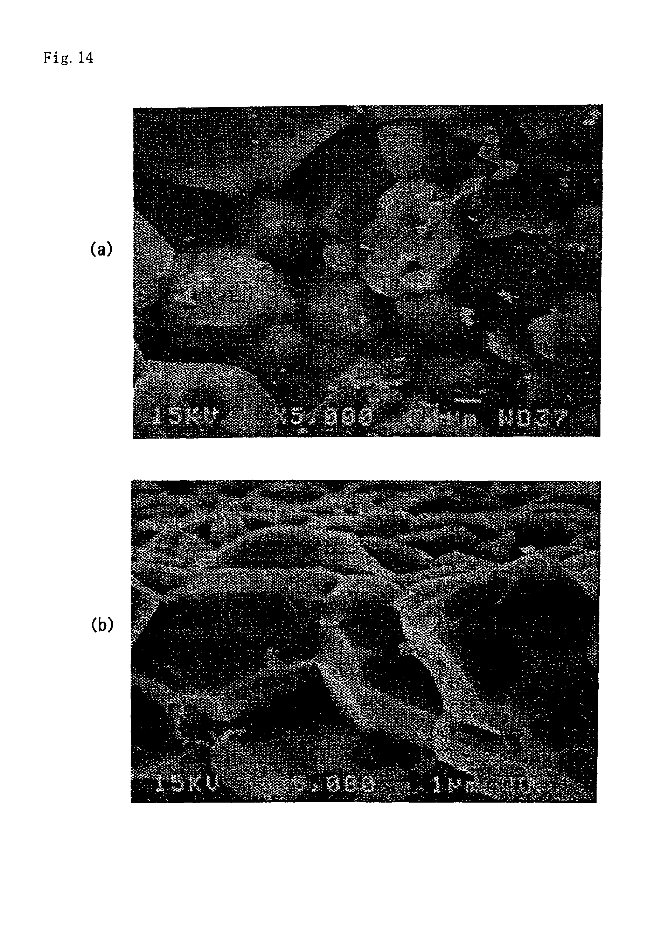

Fig. 13(a) is a scanning electron microscopic (SEM) photograph showing the surface of a ceramic substrate made of aluminum nitride before annealing treatment and (b) is a cross-sectional view thereof. Fig. 14 (a) is a scanning electron microscopic (SEM) photograph showing the surface of the above-mentioned ceramic substrate after annealing treatment at a temperature of 1700°C and (b) is a cross-sectional view thereof.

As understandable from Fig. 13 and Fig. 14, the relatively angular surface of the grains before the annealing treatment is changed to be rather round grains and it is understood that molecules in the grains are moved by the annealing treatment.

Accordingly, it is supposed that the increased strength of the sintered body is attributed to the movement of the molecules composing the sintered body.

Further by firing a formed body and subjecting the obtained primary sintered body to annealing treatment, the rare earth element moves from the center of the primary sintered body toward the outer rim direction and owing to the concentration change attributed to the movement of the rare earth element, the content of the rare earth element in the ceramic substrate is increased gradually toward the vicinity of the surface of the ceramic substrate.

In the case of producing a disk shape ceramic substrate, the ratio of the concentration of the centerpoint in the thickness direction of the substrate to the concentration in the vicinity of the substrate, that is, the center concentration/the surface concentration ratio is 0 or more and 0.5 or less, preferably 0 to 0.1.

The diameter of the above-mentioned ceramic substrate is preferably 200 mm or more. Especially, it is desirable to be 12 inches (300mm) or more. It is because such a ceramic substrate will be a main stream of a semiconductor wafer of the next generation. It is also because the problem of the cracks and damages which the present invention solves does not take place easily if the ceramic substrate has a diameter of 200 mm or less.

The thickness of the above-mentioned ceramic substrate is preferably 50 mm or less, more preferably 20 mm or less, and most preferably 1 to 5 mm.

If the thickness of the ceramic substrate exceeds 50 mm, the thermal capacity of the ceramic substrate sometimes becomes too high and especially, when heating and cooling is carried out by installing a temperature control means, the temperature following property is deteriorated in some cases owing to the high thermal capacity. Further, the warping problem of the ceramic substrate is not easily caused in the case the ceramic substrate has a thickness exceeding 50 mm.

The ceramic substrate of the present invention is to be used at 150°C or more, preferably 200°C or more.

The porosity of the ceramic substrate is preferably 0, or 5% or less. It is because drop of the thermal conductivity, occurrence of warp, drop of the strength at a high temperature can be suppressed. If the porosity exceeds 5%, it becomes difficult to make the bending strength of the ceramic substrate at 400 MPa or more.

The porosity is measured by an Archimedes' method. A sintered body is pulverized, and then the pulverized pieces are put in an organic solvent or mercury to determine its volume. Then the true specific gravity of the pieces is obtained from the weight and the measured volume thereof, and the porosity is calculated from the true specific gravity and apparent specific gravity.

The pore diameter of the largest pores of the above-mentioned ceramic substrate is preferably 50 μm or smaller, more preferably 10 μm or smaller.

If the pore diameter exceeds 50 μm, it becomes difficult to keep the breakdown voltage characteristics at a high temperature, especially at 200°C or more, and at the time of cooling the ceramic substrate, gas leakage easily takes place to result in drop of the thermal efficiency for cooling.

The reason why the pore diameter of the largest pores is preferable to be 10 μm or smaller is that the warp amount at 200°C or more can be suppressed to small and the drop of the strength can be prevented.

In the ceramic substrate of the present invention, if no pore exists, the breakdown voltage at a high temperature is especially increased and on the contrary, if pores exist, the fracture toughness value is increased. Therefore, which design should be chosen depends on the required characteristics.

The reason for the increase of the fracture toughness value owing to the existence of the pores is not clear, however it is supposedly because enlargement of cracks can be stopped by the pores.

In the present invention, a thermocouple can be embedded in the ceramic substrate based on the necessity. It is because the temperature of a resistance heating element can be measured by the thermocouple and based on the obtained data, the temperature can be controlled by changing the voltage and the current.

The size of connecting portions of metal wires of the above-mentioned thermocouple is preferably either equal to or larger than the diameter of a strand wire of the respective metal wires and 0.5 mm or smaller. With such a constitution, the thermal capacity of the connecting portions is suppressed to be small and the temperature can precisely and promptly be converted into the electric current value. Accordingly, the temperature controllability can be improved and the temperature distribution in the heating face of a semiconductor wafer is made small.

Examples of the above-mentioned thermocouple include K type, R type, B type, E type, J type, and T type thermocouples as exemplified in JIS-C-1602 (1980).

In the ceramic substrate of the present invention, when a resistance heating element is formed as a conductor, the above-mentioned ceramic substrate functions as a hot plate.

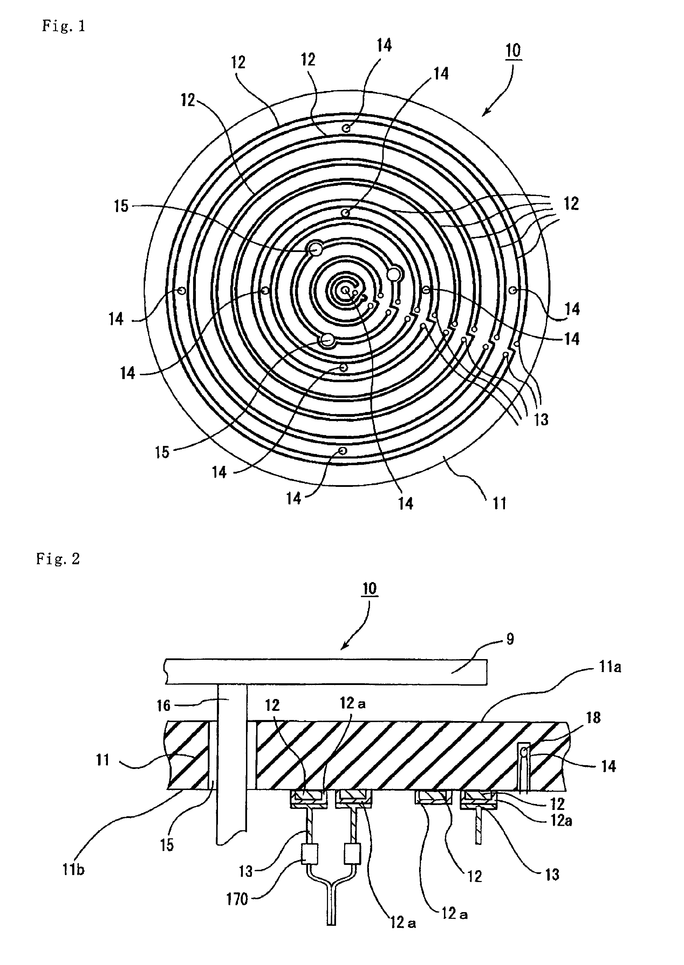

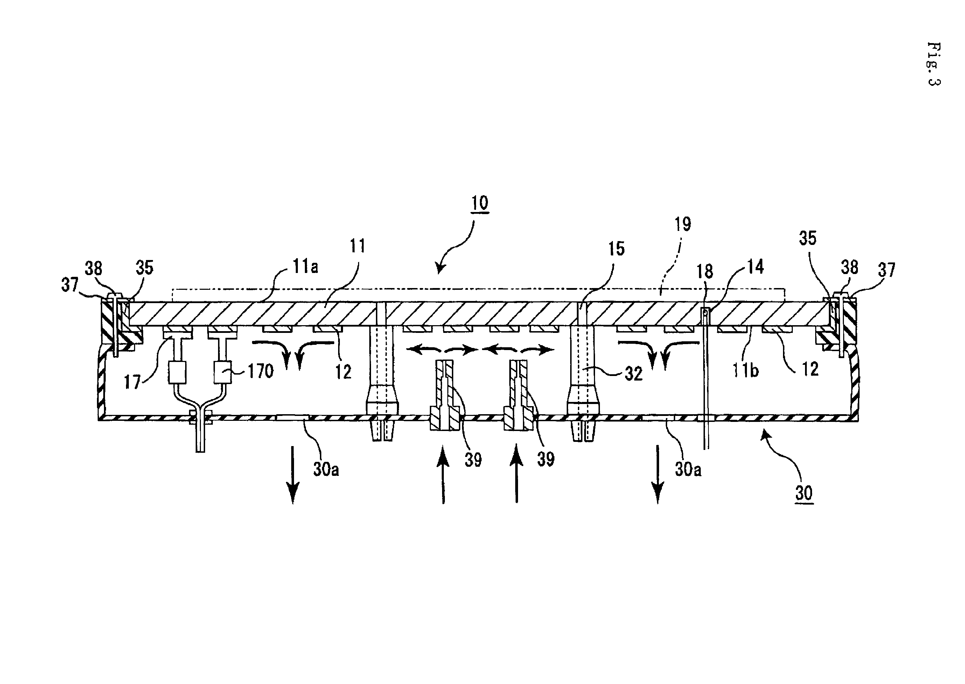

Fig. 1 is a bottom face view schematically showing one example of a hot plate according to the present invention and Fig. 2 is a partially enlarged cross-sectional view schematically showing a part of the hot plate shown in Fig. 1.

In the hot plate, the resistance heating element is formed on the bottom face of the ceramic substrate. As shown in Fig. 1, the ceramic substrate 11 is formed like a disk and a plurality of resistance heating elements 12 in the form of concentric circles are formed on the bottom face 11b of the ceramic substrate 11. These resistance heating elements 12 are arranged in a manner that two concentric circles neighboring each other constitute one line as a set of circuits and thus, the temperature in the heating face 11a is made to be even by combining the respective circuits.

Further as shown in Fig. 2, a metal covering layer 12a is formed on each resistance heating element 12 in order to prevent oxidation and external terminals 13 are joined to both ends by connecting with a solder and the like (not illustrated) . Sockets 170 equipped with wiring are attached to the external terminals 13 to connect the terminals to an electric power source and the like.

Bottomed holes 14 to insert temperature measurement elements 18 into are formed in the ceramic substrate 14 and temperature measurement elements 18 such as thermocouples are embedded internally of the bottomed holes 14. In the portion near the center, through holes 15 to insert lifter pins 16 are formed.

The lifter pins 16, which are capable of moving a silicon wafer 9 up and down while carrying the wafer thereon, are equipped and subsequently, the lifter pins are capable of transferring the silicon wafer 9 to a transporting apparatus, which is not illustrated, or receiving the silicon wafer 9 from the transporting apparatus and at the same time they are capable of disposing the silicon wafer 9 on the heating face 11a of the ceramic substrate 11 to heat the wafer; or supporting the silicon wafer 9 at a distance of 50 to 2000 μm from the heating face 11a to heat the wafer.

Further, through holes or concave portions are formed in the ceramic substrate 11 and after supporting pins having pinnacle-like or hemispherical tips are inserted into the through holes or concave portions, the supporting pins are fixed while being slightly projected out of the ceramic substrate 11 and the silicon wafer 9 may be supported by the supporting pins to be heated while being kept at 50 to 2000 μm distance from the heating face 11a.

Fig. 3 is a cross-sectional view schematically showing a supporting case 30 to fit the hot plate (the ceramic substrate) 10 with the above-mentioned structure.

On the upper part of the supporting case 30, the ceramic substrate 11 is fitted through a heat insulating material 35 and fixed using bolts 38 and pressing metal tools 37. Under the portions of the ceramic substrate 11 where through holes 15 are formed, guide pipes 32 communicated with the through holes are formed. Further, in the supporting case 30, coolant outlets 30a are formed to blow a coolant into through coolant inlets 39 and discharge the coolant out of the coolant outlets 30a to the outside, so that owing to the function of the coolant, the ceramic substrate 11 can be cooled.

Accordingly, after the hot plate 10 is heated to a prescribed temperature by electricity application to the hot plate 10, a coolant is blown through the coolant inlets 39 to cool the ceramic substrate 11.

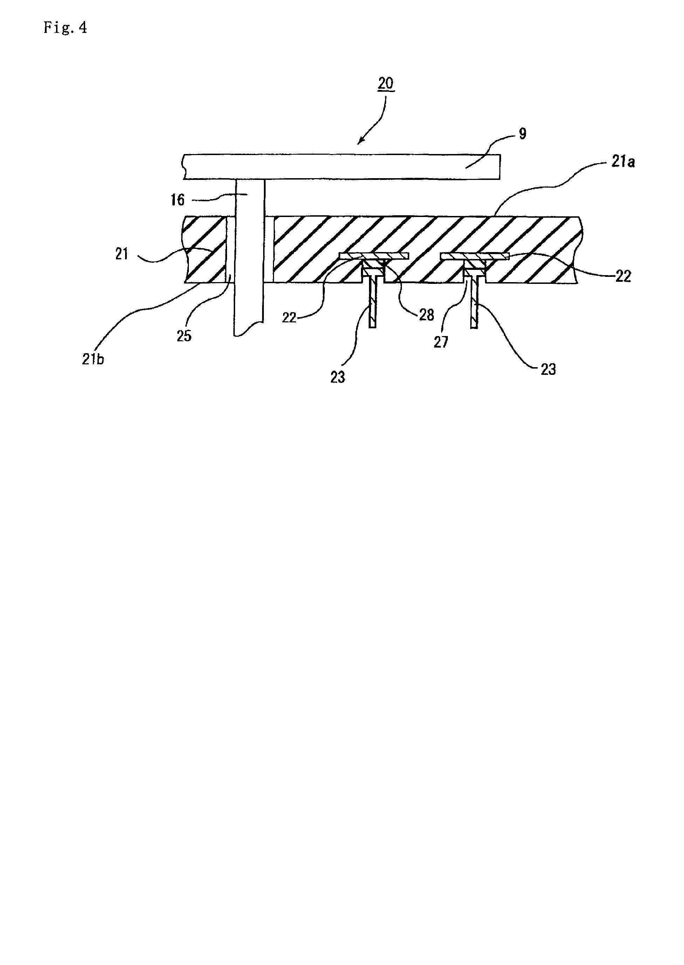

Fig. 4 is a partially enlarged cross-sectional view schematically showing another example of a hot plate of the present invention. In the hot plate, resistance heating elements are formed internally of the ceramic substrate.

Although it is not illustrated, being similar to the hot plate shown in Fig. 1, the ceramic substrate 21 is formed in a disc shape and resistance heating elements 22 are formed internally of the ceramic substrate 21 while being made to have similar patterns as that shown in Fig. 1, that is, patterns comprising concentric circles wherein two concentric circles neighboring each other constitute one line as a set of circuits.

Conductor-filled through holes 28 are formed immediately under the end parts of the resistance heating elements 22 and further, blind holes 27 to expose the conductor-filled through holes 28 are formed on the bottom face 21b and the external terminals 23 are inserted into the blind holes 27 and connected by a solder and the like (not illustrated).

Further, although being not illustrated in Fig. 3, similarly to the case of the heater plate illustrated in Fig. 1, for example, sockets having conductive wires are attached to the external terminals 23 and the conductive wires are connected to an electric power source and the like.

In the case the resistance heating elements are formed internally of the ceramic substrate constituting the heater plate of the present invention, a plurality of layers may be formed. In such a case, it is preferable that the patterns of the respective layers are formed so as to complement one another and that a pattern is formed in any of layers when being observed above the heating face. As such a structure, for example, a staggered arrangement can be exemplified.

As a resistance heating element, for example, a sintered body of a metal or a conductive ceramic, a metal foil, a metal wire, and the like can be exemplified. As a metal sintered body, at least one of metals selected from tungsten and molybdenum is preferable. It is because these metals are relatively hard to be oxidized and have a sufficient resistance value to radiate heat. Incidentally, in this specification, the sintered body to be employed as a resistance heating element is those obtained by firing but not subjected to annealing treatment.

As a conductive ceramic, at least one carbide selected from carbides of tungsten and molybdenum can be employed.

In the case resistance heating elements are formed on the bottom face of the ceramic substrate, as the metal sintered body, a noble metal (gold, silver, palladium, platinum) and nickel are desirable to be used. Particularly, silver, silver-palladium and the like can be used.

A metal particle to be used for the above-mentioned metal sintered body may be spherical, scaly, or a mixture of spherical and scaly ones.

When resistance heating elements are formed internally of or the bottom face of the ceramic substrate, it is preferable to use a conductor containing paste containing the above-mentioned metals and conductive ceramic.

That is, in the case resistance heating elements are formed internally of the ceramic substrate, after a conductor containing paste layer is formed on a green sheet, a green sheet is layered and the resulting product is fired to form resistance heating elements internally. On the other hand, in the case resistance heating elements are formed on the surface, generally, firing is carried out to produce a ceramic substrate and then a conductor containing paste layer is formed on the surface and fired to produce the resistance heating elements.

The above-mentioned conductor containing paste is not particularlylimited, however those containing resin, a solvent, a thickening agent other than a metal particle or a conductive ceramic which is for assuring the conductivity are preferable.

When resistance heating elements are formed on the ceramic substrate surface, a metal oxide may be added to a metal for sintering. Use of the above-mentioned metal oxide is to increase the adhesion strength between the ceramic substrate and the metal particle. The reason for the improvement of the adhesion strength between the ceramic substrate and the metal particle owing to the above-mentioned metal oxide is not clear, however the surface of the metal particle is slightly covered with an oxide film and in the case of not only the ceramic substrate of an oxide but also a non-oxide ceramic, an oxide film is formed on the surface of the ceramic substrate. Accordingly, it is supposed that these oxide films are sintered on the ceramic substrate surface through the metal oxide so as to be integrated with each other to result in close adhesion between the metal particle and the ceramic substrate.

As the above-mentioned metal oxide, for example, at least one of oxides selected from lead oxide, zinc oxide, silica, boron oxide ($B_2O_3$), alumina, yttria, and titania is preferable, because these oxides can improve the adhesion strength between the metal particle and the ceramic substrate without increasing the resistance value of the resistance heating elements too much.

The above-mentioned metal oxides are preferable to be 0.1 parts by weight or more and less than 10 parts by weight in 100 parts by weight of the metal particle. It is because use of such a metal oxide within the range can improve the adhesion strength between the metal particle and the ceramic substrate without making the resistance value too high.

The ratio of lead oxide, zinc oxide, silica, boron oxide ($B_2O_3$), alumina, yttria, and titania is preferable to be 1 to 10 parts by weight for lead oxide, 1 to 30 parts by weight for silica, 5 to 50 parts by weight for boron oxide, 20 to 70 parts by weight for zinc oxide, 1 to 10 parts by weight for alumina, 1 to 50 parts by weight for yttria, 1 to 50 parts by weight for titania in the case the total amount of the metal oxides is 100 parts by weight. Nevertheless, it is preferable to adjust the total of these oxides to be within a range not exceeding 100 parts by weight. Because the adhesion strength to the ceramic substrate is especially improved if the ratios are within these ranges.

In the case resistance heating elements are formed on the bottom face of the ceramic substrate, the surface of the resistance heating elements 12 are preferable to be coated with a metal layer 12a (reference to Fig. 2). The resistance heating elements 12 are a sintered body of a metal particle and easy to be oxidized when being exposed owing to the oxidation, and the resistance value is changed. Therefore, the covering of the surface with the metal layer 12a can prevent oxidation.

The thickness of the metal layer 12a is preferably 0.1 to 100 µm, because it is the range in which the resistance value of the resistance heating elements is not changed and oxidation of the resistance heating elements can be prevented.

As the metal to be used for covering, any non-oxidative metal may be used. Specifically, at least one or more metals selected from gold, silver, palladium, platinum, and nickel is/are preferable. Above all, nickel is more preferable. It is because the resistance heating elements require terminals to be connected with an electric power source and the terminals are attached to the resistance heating elements by a solder and nickel suppresses thermal diffusion of the solder. As the connecting terminals, external terminals made of Kovar can be employed.

In the case the resistance heating element are formed internally of the ceramic substrate, the surface of the resistance heating elements are not oxidized, so that the covering is unnecessary. In the case the resistance heating elements are formed internally of the ceramic substrate, some portion of the surface of the resistance heating element may be exposed.

As the resistance heating elements, a metal foil or a metal wire may be used. As the above-mentioned metal foil, a nickel foil and a stainless steel foil are preferable to be formed as the resistance heating elements by patterning by etching and the like. A patterned metal foil may be laminated with a resin film and the like. As the metal wire, for example, a tungsten wire, a molybdenum wire and the like can be exemplified.

In the case a conductor formed internally of a ceramic substrate of the present invention is an electrostatic electrode, the ceramic substrate functions as an electrostatic chuck.

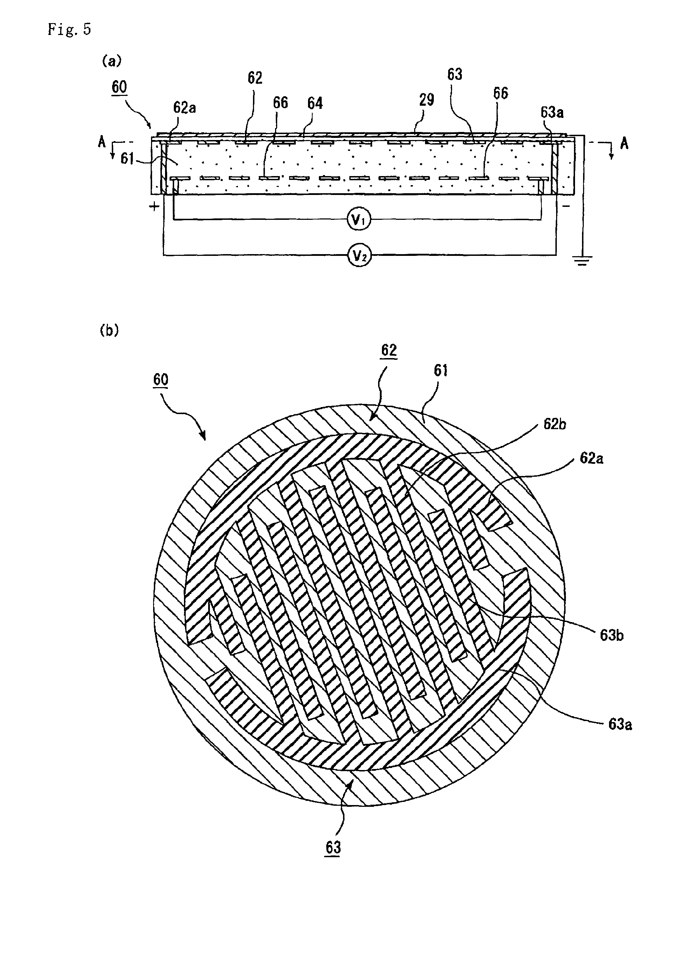

Fig. 5(a) is a cross-sectional view schematically showing an electrostatic chuck and (b) is a cross-sectional view along the A-A line of the electrostatic chuck shown in Fig. 5(a).

In the electrostatic chuck 60, chuck positive and negative electrode layers 62, 63 are embedded internally of the ceramic substrate 61 and a ceramic dielectric film 64 is formed on the electrodes. Further, internally of a ceramic substrate 61, resistance heating elements 66 are formed to heat a silicon wafer 29. Additionally, an RF electrode may be embedded in the ceramic substrate 61 based on the necessity.

Further, as shown in Fig. 5(b), the electrostatic chuck 60 is generally formed to be circular shape as viewed from the above. A chuck positive electrostatic layer 62 composed of a semicircular arc part 62a and comb teeth-shaped parts 62b and an chuck negative electrostatic layer 63 composed of a semicircular arc part 63a and comb teeth-shaped parts 63b are arranged face to face so as to alternately arrange the comb teeth-shaped parts 62b, 63b internally of the ceramic substrate 61 as shown in Fig. 5.

In the case of using the electrostatic chuck, the + side and the - side of a d.c. power source are connected respectively to the chuck positive electrostatic layer 62 and the chuck negative electrostatic layer 63 and d.c. voltage is applied. Consequently, a semiconductor wafer put on the electrostatic chuck is electrostatically adsorbed.

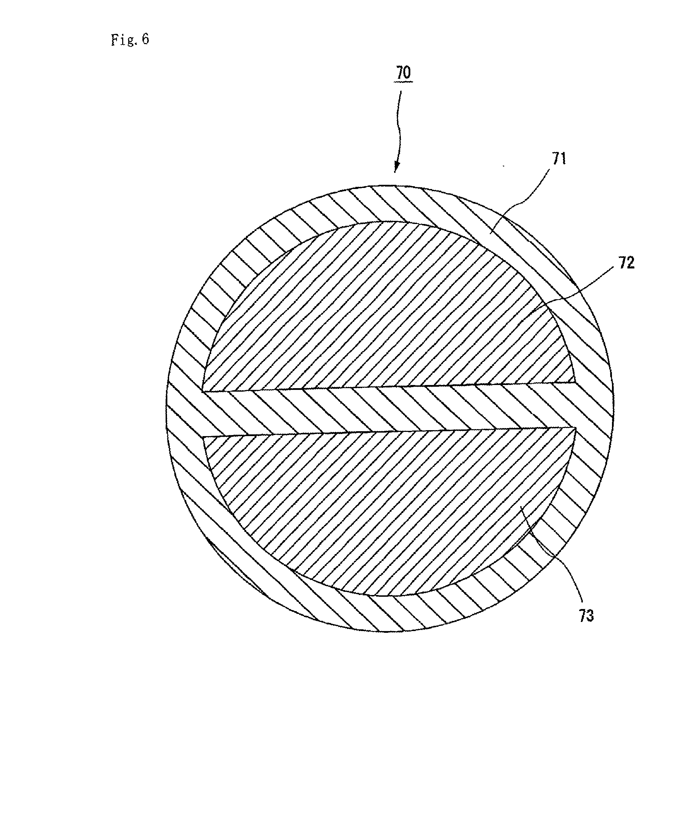

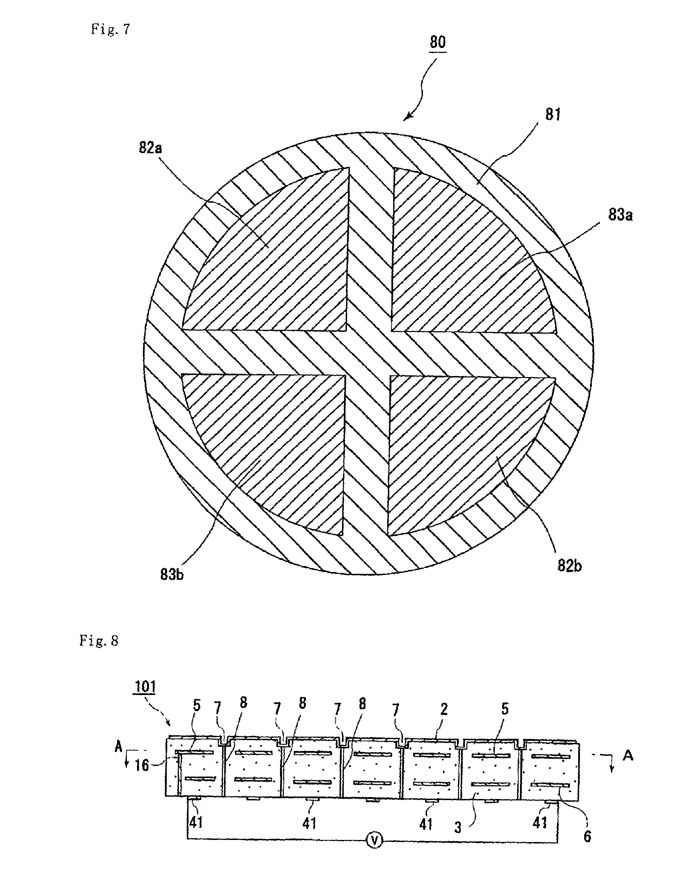

Fig. 6 and Fig. 7 are horizontal cross-sectional views schematically showing the shapes of other electrostatic electrodes constituting electrostatic chucks. In the electrostatic chuck 70 shown in Fig. 6, semi-circular chuck positive electrostatic layer 72 and chuck negative electrostatic layer 73 are formed internally of a ceramic substrate 71 and in the electrostatic chuck 80 shown in Fig. 7, chuck positive electrostatic layers 82a, 82b and chuck negative electrostatic layers 83a, 83b respectively with a shape formed by quartering a circle are formed internally of a ceramic substrate 81. Two chuck positive electrostatic layers 82a, 82b and two chuck negative electrostatic layers 83a, 83b are so formed as to be reciprocally crossing one another.

In the case of forming electrodes in divided shapes of electrodes with circular or such a shape, the number of the division is not particularly limited and may be 5 or more and the shape is neither limited to a sector.

Next, a chuck top conductor layer is formed on the surface of a ceramic substrate of the present invention and in the case a guard electrode and ground electrode are formed as a conductor internally, the above-mentioned ceramic substrate functions as a chuck top plate for a wafer prober.

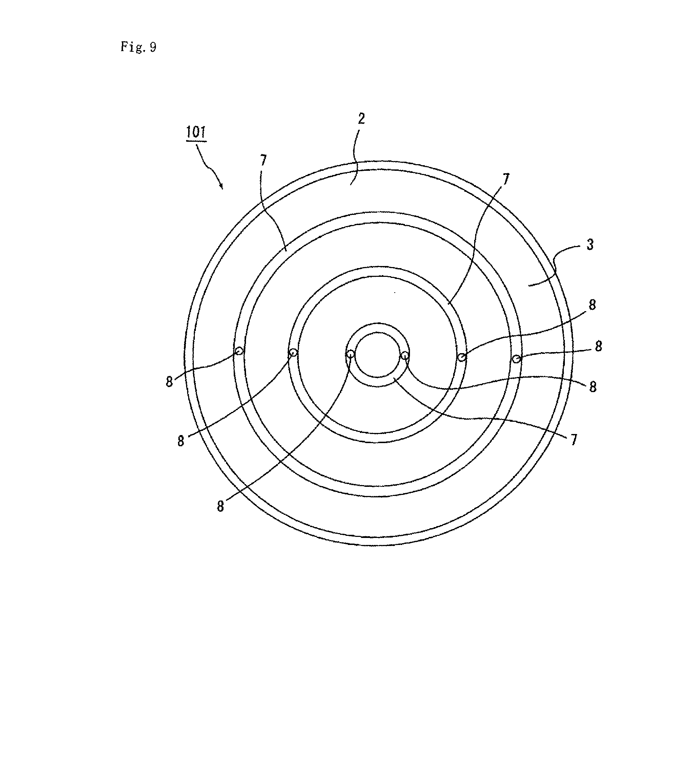

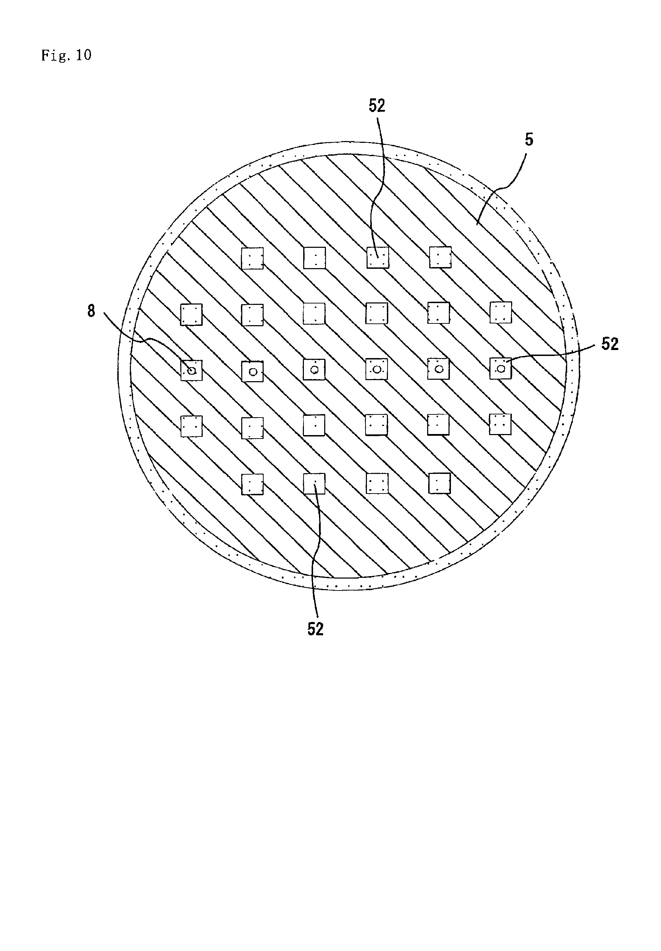

Fig. 8 is a cross-sectional view schematically showing a chuck top plate for a wafer prober (hereinafter, referred simply as to a wafer prober), which is one example of a ceramic substrate of the present invention. Fig. 9 is its planar view and Fig. 10 is a cross-sectional view along the A-A line of the wafer prober shown in Fig. 8.

In the waterprober 101, grooves 7, in the form of concentric circles, are formed on the surface of a ceramic substrate 3 with a circular shape as a planar view and a plurality of suction holes 8 for attracting a silicon wafer are formed in some parts of the grooves 7 and a chuck top conductor 2 with a circular shape is formed in the almost entire portion of the ceramic substrate 3 including the groove 7.

On the other hand, on the bottom face of the ceramic substrate 3, in order to control the temperature of a silicon wafer, resistance heating elements 41 composed by combining concentric patterns with winding line patterns as shown in Fig. 1 are formed and external terminals are connected to and fixed in terminal portions formed in both ends of the respective resistance heating elements 41. Internally of the ceramic substrate 3, in order to remove the stray capacitor and noise, guard electrodes 5 and ground electrodes 6, in the shape of lattice, shown in Fig. 10 are formed. Incidentally, the reason why the rectangular electrode non-formed portion 52 are formed in the guard electrodes 5 is to stuck upper and lower ceramic substrates sandwiching the guard electrodes.

At a wafer prober with such a structure, after a silicon wafer having an integrated circuit thereon is put on, a probe card having tester pins is pushed against the silicon wafer and voltage is applied while heating and cooling being carried out to carry out an electric communication test to examine whether the circuit is normally operated or not.

Next, a method for manufacturing a ceramic substrate of the present invention will be described.

The method for manufacturing ceramic substrates of a first to a third aspects of the present invention is not particularly limited and a ceramic substrate manufacturing method of the present invention described below can be employed. Together with description of the method for manufacturing the ceramic substrates of the first to the third aspects of the present invention, a ceramic substrate manufacturing method of the present invention will be described.

The ceramic substrate manufacturing method of the present invention is a method for manufacturing a ceramic substrate having a conductor formed on a surface thereof, or internally thereof, comprising the steps of : firing a formed body containing a ceramic powder to produce a primary sintered body; and performing an annealing process to the primary sintered body at a temperature of 1400°C to 1800°C, after the preceding step.

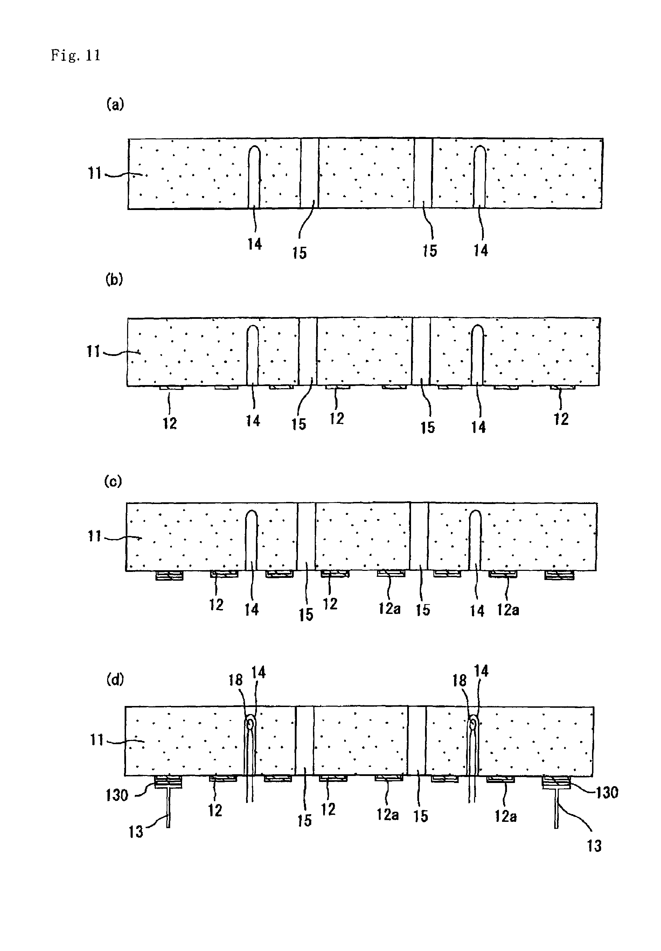

In this case, as one example of the ceramic substrate manufacturing method of the present invention, a method for manufacturing a ceramic substrate having a resistance heating element on the bottom face and functioning as a hot plate will be described with the reference to Fig. 11.

(1) Step of producing a primary sintered body to be a ceramic substrate

After a slurry is produced by adding a sintering aid such as yttria, and a binder, based on the necessity, to a ceramic powder of such as aluminum nitride described above, the slurry is granulated by spray drying method and the like and the granule is formed by putting it in a mold and pressurizing it to be like a plate and the like and obtain a raw formed body (green) . At the time of the slurry production, an amorphous or crystalline carbon may be added.

Further, in the case a ceramic substrate having a content of a rare earth element increasing gradually toward the vicinity of the surface part is manufactured, a rare earth element oxide and the like such as yttria is added as a sintering aid at the time of the slurry production.

Next, the raw formed body is heated and fired to sinter the formed body and produce a plate-like body of a ceramic . After that, a ceramic substrate 11 is manufactured by processing the plate-like body into a prescribed shape, however the plate-like body may previously be formed in such a shape that the body can be used as it is after the sintering. The formed body may be pressurized using a cold isostatic press (CIP) to promote sintering evenly and improve the sintering density. The pressure at the time of CIP is preferably 49 to 490 MPa (0.5 to 5 t/cm$^2$). By carrying out heating and firing while applying pressure, it is made possible to produce a ceramic substrate 11 without pores. Heating and firing may be carried out at a sintering temperature or more and in the case of a nitride ceramic, it is 1000 to 2500°C.

(2) Step of annealing treatment

After the above-mentioned firing, the obtained primary sintered body for a ceramic substrate is subjected to annealing treatment at 1400°C to 1800°C for 0.1 to 10 hours. The atmosphere for the annealing treatment is preferably the inert gas atmosphere. By the annealing treatment, a ceramic substrate with a further high strength can be obtained.

Next, based on the necessity, through holes to insert supporting pins into for supporting a silicon wafer, through holes 15 to insert lifter pins to transport the silicon wafer, and bottomed holes 14 to embed temperature measurement elements such as thermocouples therein are formed in the ceramic substrate 11 (Fig. 11(a)).

(3) Step of printing a conductor containing paste on a ceramic substrate

A conductor containing paste is generally a highly viscous fluid containing a metal particle, resin, and a solvent. The conductor containing paste is printed on a portions where resistance heating elements are to be formed by screen printing and the like to form conductor containing paste layers. The resistance heating elements are required to keep the temperature even on the entire body of the ceramic substrate, so that it is preferable to carry out printing in concentric circular patterns or patterns of combinations of concentric circles and winding lines. Further the conductor containing paste layers are preferable to be formed in a manner that the cross-section of the resistance heating elements 12 after firing has a rectangular and flat shape.

(4) Step of firing conductor containing paste

The conductor containing paste layers printed on the bottom face of the ceramic substrate 11 are heated and fired to remove resin and the solvent and at the same time to sinter the metal particle and bake the metal particles on the bottom face of the ceramic substrate 11 to form the resistance heating elements 12 (Fig. 11(b)). The temperature of heating and firing is preferably 500 to 1000°C.

If the above-mentioned metal oxide is added to the conductor containing paste, the metal particle, the ceramic substrate and the metal oxide are sintered and integrated, so that the adhesion between the resistance heating elements and the ceramic substrate is improved.

(5) Formation of metal covering layer

Next, a metal covering layer 12a is formed on the surface of the resistance heating elements 12 (Fig. 11(c)). The metal covering layer 12a may be formed by electroplating, electroless plating, sputtering and the like and in consideration of mass productivity, the electroless plating is the most optimum.

(6) Attaching terminals and the like

External terminals 13 for connection to an electric power source are attached to the end portions of the circuits of the resistance heating elements 12 through a solder paste layer 130 (Fig. 11(d)). After that, temperature measurement elements 18 such as thermocouples and the like are embedded in the bottomed holes 14 and sealed with heat resistant resin such as polyimide and the like. Further, although not being illustrated, sockets having conductive wires are attached to the external terminals 13 in a detachable manner.

(7) After that, the obtained ceramic substrate having such resistance heating elements 12 is fitted, for example, in a cylindrical supporting case and lead wires extended from the sockets are connected to an electric power source to complete manufacture of a hot plate unit.

At the time of manufacturing the above-mentioned ceramic substrate having the resistance heating elements on the bottom face, an electrostatic chuck can be manufactured by installing electrostatic electrodes internally of the ceramic substrate and also, a ceramic substrate for a wafer prober can be manufactured by forming a chuck top conductor layer in the heating face and guard and ground electrodes internally of the ceramic substrate.

In the case electrodes are formed internally of the ceramic substrate, a metal foil and the like may be embedded internally of the ceramic substrate. On the other hand, in case a conductor is formed on the surface of the ceramic substrate, a sputtering method and a plating method may be employed and these methods may be employed in combination.

Next, a method for manufacturing a hot plate having resistance heating elements internally of a ceramic substrate of the present invention will be described.

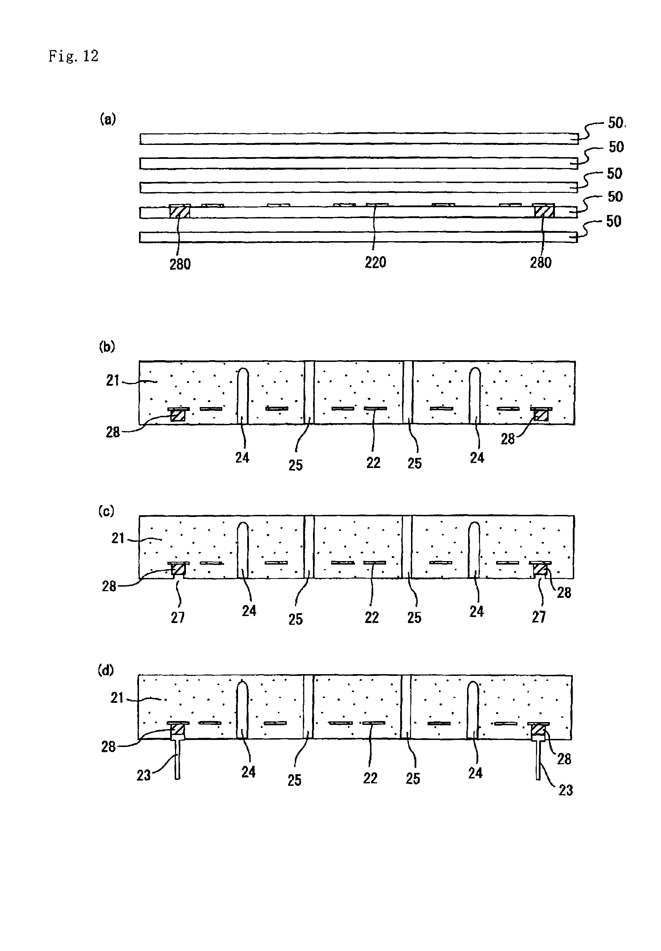

Fig. 12(a) to 12(d) shows a cross-sectional view schematically showing the above-mentioned hot plate manufacturing method.

(1) Step of producing green sheet

At first a paste is prepared by mixing a nitride ceramic powder with a binder, a solvent and the like and using the resultant paste, a green sheet is produced.

As the above-mentioned ceramic powder, aluminum nitride and the like can be used and in order to produce a dense sintered body, it is preferable to add a sintering aid comprising a rare earth element oxide such as yttria and the like. At the time of producing a green sheet, a crystalline or amorphous carbon may be added.

Also, as a binder, at least one selected from acrylic binder, ethyl cellulose, butyl cellosolve, and polyvinyl alcohol is preferable to be used.

Further, as the solvent, at least one solvent selected from $\alpha$-terpineol and glycol is preferable to be used.

A paste obtained by mixing them is formed in a sheet-like shape by doctor blade method to produce a green sheet 50.

The thickness of the green sheet 50 is preferably 0.1 to 5 mm.

Next, the following portions are formed to the obtained green sheet, based on the necessity: the portions to be through holes to insert supporting pins into for supporting a silicon wafer; the portions to be through holes 25 to insert lifter pins into for transporting the silicon wafer; the portions to be bottomed holes 24 to embed temperature measurement elements such as thermocouples into; and the portions to be conductor-filled through holes 28 to connect resistance heating elements with external terminals. The above-mentioned processing may be carried out after formation of a green sheet lamination which will be described later.

(2) Step of printing a conductor containing paste on a green sheet

On the green sheet 50, a conductor containing paste containing a metal paste or a conductive ceramic is printed to form conductor containing paste layers 220 and the portions to be conductor-filled through holes 28 are filled with the conductor containing paste to form filled layers 280.

The average particle diameter of a tungsten particle or a molybdenum particle, which is the above-mentioned metal particle, is preferably 0.1 to 5 $\mu$m. It is because if the average particle size is smaller than 0.1 $\mu$m or larger than 5 $\mu$m, the conductor containing paste is difficult to be printed.

Such a conductor containing paste includes, for example, a composition (a paste) obtained by mixing 85 to 87 parts by weight of a metal particle or a conductive ceramic particle; 1.5 to 10 parts by weight of at least one binder selected from acrylic type one, ethyl cellulose, butyl cellosolve and polyvinyl alcohol; and 1.5 to 10 parts by weight of at least one solvent selected from $\alpha$-terpineol and glycol.

(3) Step of laminating Green sheets

Green sheets 50 produced by the above-mentioned step (1), which have no printed conductor containing paste are laminated on the upper and lower faces of the green sheet 50 produced by the above-mentioned step (2) which is having the printed conductor containing paste layers 220 (Fig. 12(a)).

In this case, the number of the green sheets 50 laminated on the upper side is made larger than the number of the green sheets 50 laminated on the lower side to make the formation position of the resistance heating elements 22 unevenly near to the bottom face.

Specifically, the number of the laminated layers of the green sheets 50 on the upper side is preferably 20 to 50 and the number of the laminated layers of the green sheets 50 on the lower side is preferably 5 to 20.

(4) Step of firing green sheet lamination

The green sheet lamination is heated and pressurized and further, after being pre-fired at 300 to 1000°C, the resulting lamination is pressurized using a cold isostatic press (CIP), so that the dispersion of the thermal conductivity attributed to the unevenness of the sintering density can be suppressed. The pressure at the time of CIP is preferably 49 to 490 MPa (0.5 to 5 t/cm$^2$). As described above, the green sheets 50 and the conductor containing paste internally thereof are sintered to produce a primary sintered body to be a ceramic substrate 21.

The heating temperature is preferably 1000 to 2000°C and the pressurizing pressure is preferably 10 to 20 MPa. Heating is carried out in the inert gas atmosphere. As the inert gas, for example, argon, nitrogen and the like can be used.

(5) Step of annealing treatment

After the above-mentioned firing, the obtained sintered body for a ceramic substrate is subjected to annealing at 1400°C to 1800°C for 0.1 to 10 hours. The atmosphere for the annealing treatment is preferably the inert gas atmosphere. By the annealing treatment, a ceramic substrate with a further high strength can be obtained.

(6) Step for processing treatment and the like

Through holes 25 to insert lifter pins into and bottomed holes 24 to insert temperature measurement elements are formed in the obtained ceramic substrate 21 (Fig. 12(b)) and successively, blind holes 27 to expose conductor-filled through holes 28 are formed (Fig. 12(c)). The through holes 25, the bottomed holes 24, and the blind holes 27 can be formed by carrying out drilling process, blast treatment such as sand blast, after surface polishing.

Next, external terminals 23 are connected to the conductor-filled through holes 28 exposed by the blind holes 27 using a gold braze and the like (Fig. 12(d)). Further, although it is not illustrated, for example, sockets having conductive wires are attached to the external terminals 23 in a detachable manner.

The heating temperature is preferably 90 to 450°C in the case of the soldering treatment and 900 to 1100°C in the case of using a braze material. Further, thermocouples and the like as a temperature measurement elements are sealed with heat resistant resin to obtain a hot plate.

(7) After that, the obtained ceramic substrate 21 having such resistance heating elements 12 internally thereof is fitted in a cylindrical supporting case and lead wires extended from the sockets are connected to an electric power source to complete manufacture of a hot plate unit.

While placing a silicon wafer thereon or supporting a silicon wafer with supporting pins and then heating or cooling the silicon wafer, the above-mentioned hot plate is capable of carrying out various operations. At the time of manufacturing the above-mentioned hot plate, electrostatic electrodes may be formed internally of the ceramic substrate to manufacture an electrostatic chuck and also, a chuck top conductor layer is formed on a heating face and guard electrodes and ground electrodes are formed internally of the ceramic substrate to manufacture a ceramic substrate for a wafer prober.

In the case electrodes are formed internally of the ceramic substrate, conductor containing paste layers may be formed on the surface of a green sheet similarly to the case of forming the resistance heating elements. Also, in the case of forming a conductor on the surface of the ceramic substrate, a sputtering method and a plating method may be employed and these methods may be employed in combination.

Best Modes for Carrying Out the invention

Hereinafter, the present invention will be described further in details.

(Example 1) Manufacture of a hot plate made of aluminum nitride (reference to Fig. 1)

(1) A composition containing 100 parts by weight of an aluminum nitride powder (made by Tokuyama Corporation; the average particle diameter of 1.1 μm), 4 parts by weight of yttrium oxide ($Y_2O_3$; yttria, the average particle diameter of 0.4 μm), 12 parts by weight of an acrylic resin binder, and alcohol was subjected to spray drying to produce a granular powder.

(2) Next, the granular powder was put in a mold and formed into a plate-like body to obtain a raw formed body (a green).

(3) The raw formed body finished for processing was hot pressed at a temperature of 1800°C and a pressure of 20 MPa to obtain a primary sintered body of aluminum nitride with a thickness of 3 mm.

(4) Next, the primary sintered body of aluminum nitride was subjected to annealing treatment at 1700°C for 3 hours in nitrogen gas and after that, a disk body with a diameter of 210 mm was cut from the obtained sintered body to obtain a plate-like body made of a ceramic (a ceramic substrate 11).

Next, the ceramic substrate was processed by drilling or processed by a cutting member to form through holes 15 to insert lifter pins into, through holes to insert lifter pins into to support a silicon wafer, and bottomed holes 14 (the diameter: 1.1 mm; the depth: 2 mm) to embed thermocouples.

(5) A conductor containing paste was printed on the bottom face of the ceramic substrate obtained in the above-mentioned step (4) by screen printing. The printed patterns were made to be the patterns composed of concentric circles and winding lines in combination as shown in Fig. 1.

As the conductor containing paste, Solvest PS 603D manufactured by Tokuriki Kagaku Kenkyu-zyo Co., Ltd., which was used for forming plated through holes of a printed circuit board, was employed.

The conductor containing paste was a silver-lead paste and contained 7.5 parts by weight of metal oxides consisting of lead oxide (5 % by weight), zinc oxide (55 % by weight), silica (10 % by weight), boron oxide (25 % by weight), and alumina (5 % by weight) in 100 parts by weight of silver. The silver particle had an average particle diameter of 4.5 μm and scaly shape.

(5) Next, the ceramic substrate printed with the printed conductor containing paste was heated and fired at 780°C to sinter silver and lead in the conductor containing paste and at the same time bake them on the ceramic substrate to form resistance heating elements 12. The resistance heating elements 12 of silver-lead had a thickness of 5 μm, a width of 2.4 mm, and the area resistivity of 7.7 mΩ/□ in the vicinity of terminals.

(6) Next, the ceramic substrate manufactured by the above-mentioned step (5) was immersed in an electroless nickel plating bath comprising an aqueous solution containing nickel sulfate 80 g/l, sodium hypophosphite 24 g/l, sodium acetate 12 g/l, boric acid 8 g/l, and ammonium chloride 6 g/l to deposit a metal covering layer 12a (a nickel layer) with a thickness of 1 μm on the surface of the silver-lead resistance heating elements 12.

(7) A silver-lead solder paste (made by Tanaka Kikinzoku Kogyo K.K.) was printed to form solder layers on the terminal portions for assuring the connection with an electric power source.

Then, external terminals 13 made of Kovar were put on the solder layers and heated at 420°C to carry out reflow and the external terminals 13 were attached to the terminal portions of the resistance heating elements.

(8) Thermocouples for controlling the temperature were inserted into the bottomed holes and polyimide resin was filled therein and cured at 190°C for 2 hours to obtain a hot plate 10 (reference to Fig. 1).

(Example 2) Manufacture of an electrostatic chuck made of aluminum nitride

(1) A composition containing 100 parts by weight of an aluminum nitride powder (made by Tokuyama Corporation; the average particle diameter of 1.1 μm), 4 parts by weight of yttria (the average particle diameter of 0.4 μm), 12 parts by weight of an acrylic resin binder, 0.5 parts by weight of a dispersant, and 53 parts by weight of alcohol comprising 1-butanol and ethanol was used and formed by doctor blade method to obtain a green sheet with a thickness of 0.47 mm.

(2) Next, after the green sheet was dried at 80°C for 5 hours, punching was carried out to form through holes for conductor-filled through holes for connecting resistance heating elements and external terminals.

(3) A conductor containing paste A was prepared by mixing 100 parts by weight of a tungsten carbide particle with an average particle diameter of 1 μm, 3.0 parts by weight of an acrylic binder, 3.5 parts by weight of α-terpineol solvent, and 0.3 parts by weight of a dispersant. Also, a conductor containing paste B was prepared by mixing 100 parts by weight of a tungsten particle with an average particle diameter of 3 μm, 1.9 parts by weight of an acrylic binder, 3.7 parts by weight of α-terpineol solvent, and 0.2 parts by weight of a dispersant.

(4) The above-mentioned conductor containing paste A was printed on the surface of the green sheet by screen printing method to form resistance heating elements. The printed patterns were made similar to those of Example 1 composed of combinations of concentric circles and winding lines. Also, conductor containing paste layers in electrostatic electrode patterns shown in Fig. 5 were formed in another green sheet.

Further, the above-mentioned through holes for conductor-filled through holes for connecting external terminals were filled with the conductor containing paste B. The electrostatic electrode patterns comprised comb teeth-shaped electrodes (62, 62), and the comb portions 62b, 63b were respectively joined to semi-circular arc portions 62a, 63a (reference to Fig. 5(b)).

On the green sheet printed with resistance heating element patterns, thirty four green sheets having no printed conductor containing paste layer were laminated on the upper side (the heating surface side) and thirteen sheets were laminated on the lower side (the bottom face side) and further a green sheet having a printed conductor containing paste layer having an electrostatic electrode pattern was laminated thereon. Then, two green sheets printed no conductor containing paste layer were further laminated thereon and then the resulting green sheets were pressure-bonded at 130°C and a pressure of 8 MPa to obtain lamination.

(5) Next, the obtained lamination was degreased at 600°C for 5 hours in nitrogen gas and then hot pressed in conditions of 1,890°C and pressure of 15 MPa for 3 hours to obtain a primary sintered body of aluminum nitride with a thickness of 3 mm.

After that, the primary sintered body of aluminum nitride was subjected to annealing treatment at 1600°C for 3 hours in nitrogen atmosphere and after that, a disk-like body with a diameter of 230 mm was cut from the obtained sintered body to obtain a ceramic substrate made of aluminum nitride and having resistance heating elements 66 with a thickness of 5 μm, a width of 2.4 mm, and the area resistivity of 7.7mΩ/□ and chuck positive electrostatic layers 62 and chuck negative electrostatic layers 63 with a thickness of 6 μm internally.

(6) After the ceramic substrate 61 obtained in the above-mentioned step (5) was polished by a diamond grind stone, a mask was put thereon and blast treatment by SiC and the like was carried out to form bottomed holes (the diameter: 1.2 mm, the depth: 2.0 mm) for thermocouples on the surface and U-shaped notches (the width: 8 mm, the depth: 12 mm) at the circumferential rim part.

(7) Further, the portions where the conductor-filled through holes were formed were hollowed out to form blind holes and a gold braze of Ni-Au was used for the blind holes and heated at 700°C for reflow and external terminals made of Kovar were connected.

(8) Next, a plurality of thermocouples for controlling the temperature were embedded in the bottomed holes to complete the manufacture of an electrostatic chuck having resistance heating elements in patterns shown in Fig. 1.

(Example 3) Manufacture of a chuck top plate for a wafer prober made of aluminum nitride.

(1) A composition containing 100 parts by weight of an aluminum nitride powder (made by Tokuyama Corporation; the average particle diameter of 0.6 μm), 4 parts by weight of yttria (the average particle diameter of 0.4 μm), 12 parts by weight of an acrylic resin binder, 0.5 parts by weight of a dispersant, and 53 parts by weight of alcohol comprising 1-butanol and ethanol was used and formed by doctor blade method to obtain a green sheet with a thickness of 0.47 mm.

(2) Next, after the green sheet was dried at 80°C for 5 hours, punching was carried out to form through holes for conductor-filled through holes for connecting electrodes and external terminals.

(3) A conductor containing paste A was prepared by mixing 100 parts by weight of a tungsten carbide particle with an average particle diameter of 1 μm, 3.0 parts by weight of an acrylic binder, 3.5 parts by weight of α-terpineol solvent, and 0.3 parts by weight of a dispersant. Also, a conductor containing paste B was prepared by mixing 100 parts by weight of a tungsten particle with an average particle diameter of 3 μm, 1.9 parts by weight of an acrylic binder, 3.7 parts by weight of α-terpineol solvent, and 0.2 parts by weight of a dispersant.

(4) The above-mentioned conductor containing paste A was printed on the surface of the green sheet by screen printing method to form printed layers for guard electrodes and printed layers for ground electrodes in the shape of lattice (reference to Fig. 8 and Fig. 10).

Also, the above-mentioned through holes for the conductor-filled through holes for connecting external terminals were filled with the conductor containing paste B to form filled layers for the conductor-filled through holes.

Green sheets having the printed conductor containing paste and green sheets having no printing in number of 50 were laminated and integrated at 130°C and a pressure of $8 \times 10^4$ Pa.

(5) The integrated lamination was degreased at 600°C for 5 hours and then hot pressed in conditions of 1,890°C and a pressure of $1.5 \times 10^5$ Pa for 3 hours to obtain a primary sintered body of aluminum nitride with a thickness of 3 mm. Next, the primary sintered body was subjected to annealing treatment at 1400°C for 3 hours in nitrogen atmosphere and after that, a disk-like body with a diameter of 230 mm was cut from the obtained sintered body to obtain a ceramic substrate. Regarding the size of the conductor-filled through holes, the diameter was 0.2 mm and the depth was 0.2 mm. The thickness of the guard electrodes 5 and the ground electrodes 6 was 10 μm and the formation position of the guard electrodes 5 in the thickness direction of the sintered body was 1 mm from the chuck face. On the other hand the formation position of the ground electrodes 6 in the thickness direction of the sintered body was 1.2 mm from the heating elements.

(6) After the ceramic substrate obtained in the above-mentioned step (5) was polished by a diamond grind stone, a mask was put thereon and blast treatment by SiC and the like was carried out to form bottomed holes for thermocouple installation in the surface, grooves 7 (the width: 0.5 mm, the depth: 0.5 mm) for sucking a wafer, and U-shaped notches (the width: 10 mm, the depth: 15 mm) in the circumferential rim part.

(7) Further, a conductor containing paste was printed on the back face (the bottom face) which is the opposite to the chuck face in which the grooves 7 were formed, to form conductor containing paste layers for resistance heating elements. As the conductor containing paste, Solvest PS 603D manufactured by Tokuriki Kagaku Kenkyu-zyo Co., Ltd., which was used for forming plated through holes of a printed circuit board, was employed. That is, the conductor containing paste was a silver/lead paste and contained 7.5 % by weight of metal oxides consisting of lead oxide, zinc oxide, silica, boron oxide, and alumina (in the respective ratios by weight of 5/ 55/ 10/ 25/ 5) to the weight of silver.

Silver used for the conductor containing paste had an average particle diameter of 4.5 μm and scaly shape.

(8) The ceramic substrate formed with circuits on the bottom face by printing the conductor containing paste (the ceramic substrate) was heated and fired at 780°C to sinter silver and lead in the conductor containing paste and at the same time bake them on the ceramic substrate to form resistance heating elements. The patterns of the resistance heating elements were made to be similar to the patterns used in Example 1, which is composed of combinations of the concentric circles and winding lines (reference to Fig. 1). Next, the ceramic substrate was immersed in an electroless nickel plating bath comprising an aqueous solution containing nickel sulfate 30 g/l, boric acid 30 g/l, ammonium chloride 30 g/l, and Rochelle salt 60 g/l to deposit a nickel layer with a thickness of 1 μm and containing 1 % or less by weight of boron on the surface of the resistance heating elements made of the above-mentioned conductor containing paste so as to thicken the resistance heating elements and after that, thermal treatment was carried out at 120°C for 3 hours.

The resistance heating elements 41 including the nickel layer had a thickness of 5 μm, a width of 2.4 mm, and the area resistivity of 7.7 mΩ/□.

(9) On the chuck face in which the grooves 7 were formed, respective layers of Ti, Mo, and Ni were successively formed by sputtering method. The sputtering was carried out using SV-4540 manufactured by ULVAC Japan Co. as an apparatus under the conditions: the atmospheric pressure: 0.6 Pa; the temperature: 100°C; the electric power: 200 W; and treatment duration: 30 seconds to 1 minute and the sputtering duration was adjusted depending on the respective metals to be sputtered.

The resulting film was composed of 0.3 μm of Ti, 2 μm of Mo, and 1 μm of Ni from the image by fluorescent x-ray analyzer.

(10) The ceramic substrate obtained by the above-mentioned step (9) was immersed in an electroless nickel plating bath comprising an aqueous solution including nickel sulfate 30 g/l, boric acid 30 g/l, ammonium chloride 30 g/l, and Rochelle salt 60 g/l to deposit a nickel layer (a thickness of 7 μm) containing not more than 1 % by weight of boron on the surface of the grooves 7 and after that, thermal treatment was carried out at 120°C for 3 hours.

Further, the ceramic substrate surface (the chuck face side) was immersed in an electroless gold plating solution containing potassium cyanoaurate 2 g/l, ammonium chloride 75 g/l, sodium citrate 50 g/l, and sodium hypophosphite 10 g/l at 93°C for 1 minute to further laminate a gold plating layer with a thickness of 1 μm on the nickel plating layer in the chuck face side of the ceramic substrate and form the chuck top conductor 2.

(11) Next, air suction holes 8 were formed by piercing from the grooves 7 to the back face and blind holes for exposing the conductor-filled through holes were formed. Using a gold braze of a Ni-Au alloy (Au 81.5 % by weight, Ni 18.4% by weight, and impurities 0.1% by weight), external terminals made of Kovar were connected to the blind holes by heating the gold braze at 970°C for reflow. Also, external terminals made of Kovar were formed in the resistance heating elements 41 through a solder alloy (tin 9/lead 1).

(12) In order to control the temperature, a plurality of thermocouples (not illustrated) were embedded in the bottomed holes to complete the manufacture of the chuck top plate equipped with heaters for a wafer prober.

(Example 4) Manufacture of a hot plate made of a silicon carbide powder

(1) A composition containing 100 parts by weight of a silicon carbide powder (made by Yakushima Denko; Diasic GC-15; the average particle diameter of 1.1 μm), 4 parts by weight of carbon, 12 parts by weight of an acrylic resin binder, 5 parts by weight of $B_4C$, 0.5 parts by weight of a dispersant, and alcohol comprising 1-butanol and ethanol was subjected to spray drying to produce a granular powder.

(2) Next, the granular powder was put in a mold and formed into a flat shape to obtain a raw formed body.

(3) The raw formed body after the processing was hot pressed at a temperature of 1900°C and a pressure of 20 MPa to obtain a primary sintered body of silicon carbide with a thickness of 3 mm.

(4) Next, the primary sintered body of silicon carbide was subjected to annealing treatment at 1600°C for 3 hours in nitrogen gas and after that, a disk body with a diameter of 210 mm was cut from the obtained sintered body to obtain a plate-like body made of a ceramic (a ceramic substrate) . Further, a glass paste (G-5270 made by Shouei Chemical Products Co., Ltd.) was applied and then heated at 600°C and melted thereof to form a $SiO_2$ layer with a thickness of 2 μm on the surface thereof.

Next, the ceramic substrate was processed by drilling or processed by a cutting member to form through holes to insert lifter pins into, through holes to insert lifter pins into to support a silicon wafer, and bottomed holes (the diameter: 1.1 mm; the depth: 2 mm) to embed thermocouples.

(5) A conductor containing paste was printed on the bottom face of the ceramic substrate obtained in the above-mentioned step (4) by screen printing. The printed patterns were made to be the patterns in the form of concentric circles as shown in Fig. 1. As the conductor containing paste, Solvest PS 603D manufactured by Tokuriki Kagaku Kenkyu-zyo Co., Ltd., which was used for forming plated through holes of a printed circuit board, was employed.

The conductor containing paste was a silver-lead paste and contained 7.5 parts by weight of metal oxides consisting of lead oxide (5% by weight), zinc oxide (55 % by weight) , silica (10 % by weight), boron oxide (25 % by weight), and alumina (5 % by weight) in 100 parts by weight of silver. The silver particle had an average particle diameter of 4.5 μm and scaly shape.

(6) Next, the ceramic substrate printed with the printed conductor containing paste was heated and fired at 780°C to sinter silver and lead in the conductor containing paste and at the same time bake them on the ceramic substrate to form resistance heating elements. The resistance heating elements of silver-lead had a thickness of 5 μm, a width of 2.4 mm, and the area resistivity of 7.7 mΩ/□ in the vicinity of terminals.

(7) Next, to the bottom face of the ceramic substrate printed with the resistance heating elements, the above-mentioned glass paste was applied and fired at 600°C to form a glass coating on the surface. However, no glass coating was formed in the terminal portions of the resistance heating elements.

(8) A silver-lead solder paste (made by Tanaka Kikinzoku Kogyo K.K.) was printed to form solder layers on the terminal portions for assuring the connection with an electric power source.

Then, external terminals made of Kovar were put on the solder layers and heated at 420°C to carry out reflow and the external terminals were attached to the terminal portions of the resistance heating elements.

(9) Thermocouples for controlling the temperature were inserted into the bottomed holes and polyimide resin was filled therein and cured at 190°C for 2 hours to obtain a hot plate (reference to Fig. 1).

(Comparative Example 1) Manufacture of a hot plate made of aluminum nitride

A hot plate was manufacture in the same manner as Example 1, except that no annealing treatment was carried out.

(Comparative Example 2) Manufacture of a hot plate made of silicon carbide

A hot plate was manufacture in the same manner as Example 4, except that no annealing treatment was carried out.

For the ceramic substrates manufactured by Examples 1 to 4 and Comparative Examples 1 and 2, the bending strength, the content of yttria, and the number of free particles were measured by the following methods and the shapes of the grains composing the respective sintered bodies were observed. The results were shown in the following Table 1.

Evaluation method

(1) Measurement of bending strength

Using Instron Mighty Tester (4507 model, load cell 500 kgf), a test was carried out in conditions; a temperature of 400°C in atmospheric air; a cross head speed: 0.5 mm/minute; a span distance L: 30 mm; a thickness of each specimen: 3.06 mm; and a width of each specimen: 4.03 mm and the 3-point bending strength $\sigma$ (kgf/mm$^2$) was calculated from the following equation (1). Incidentally, in Table 1, the unit was converted and expressed in MPa.

$$\sigma = 3PL/2\ wt^2 \tag{1}$$

In the above-mentioned equation (1), P denotes the maximum load (kgf) at the time of each specimen was broken: L denotes the distance (30 mm) between the downstream fulcra: t denotes the thickness (mm) of each specimen: and w denotes the width (mm) of each specimen.

(2) Shape of grains composing a sintered body

After the bending strength of ceramic substrates obtained in Example 1 and Comparative Example 1 were measured by the above-mentioned method, fractured cross-sectional faces were photographed by SEM. The fractured cross-sectional faces of the ceramic substrate obtained in Example 1 was shown in Fig. 14 and the fractured cross-sectional faces of the ceramic substrate obtained in Comparative Example 1 was shown in Fig. 13.

(3) Concentration ratio of yttria

Regarding the ceramic substrate obtained in Example 1, the distribution state of $Y_2O_3$ was measured on the basis of the concentration difference between the center of the substrate and the surface of the substrate by a fluorescent x-ray analyzer (Rigaku RIX 2000), as concentration ratio of ytria the ratio of the average yttria concentration (the center concentration) of 10 points at the center in the thickness direction of the substrate and the average yttria concentration (the surface concentration) of 10 points in the surface portion were calculated according to the following equation (2). The results were shown in Table 1.

$$(\text{concentration ratio of yttria}) = (\text{center concentration})/(\text{surface concentration}) \tag{2}$$

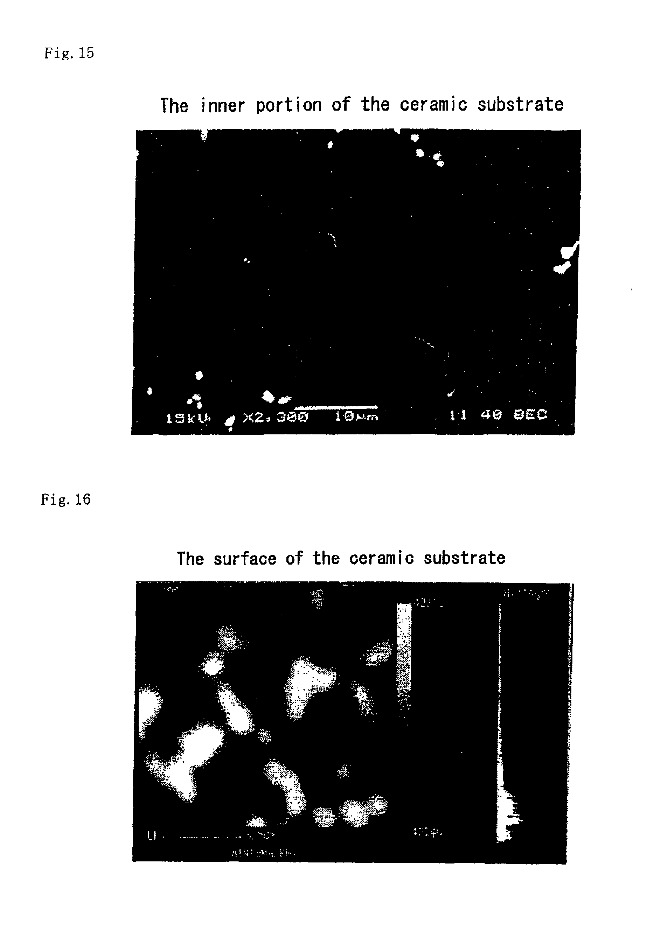

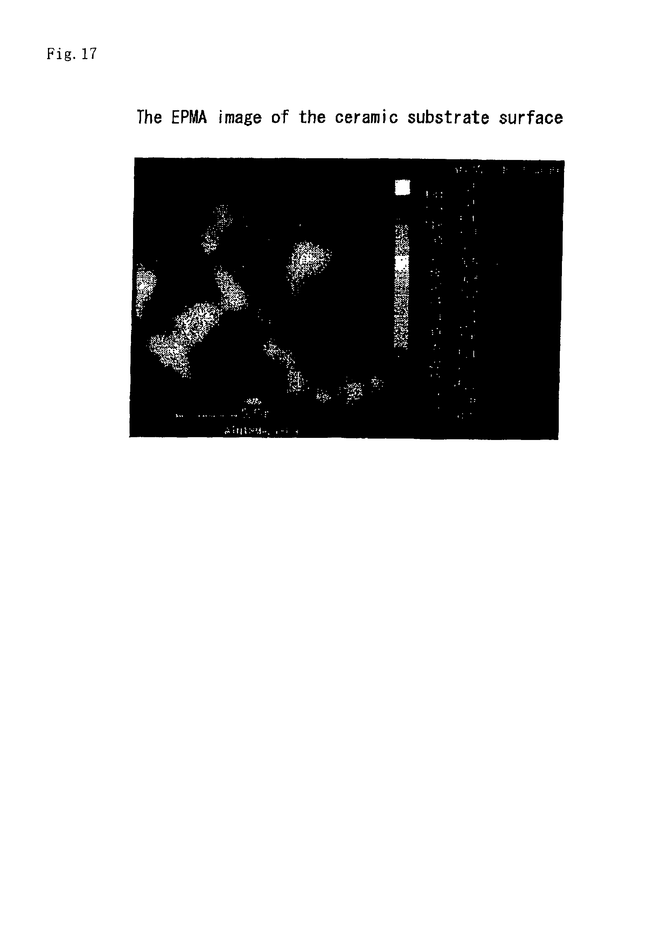

Further, in order to investigate the distribution of yttria in the ceramic substrate, observation by an electron microscope and EPMA was carried out. Fig. 15 is an electron microscopic photograph showing the inner portion of the ceramic substrate subjected to annealing treatment: Fig. 16 is an electron microscopic photograph showing the surface of the ceramic substrate subjected to annealing treatment: and Fig. 17 is an EPMA image showing the surface of the ceramic substrate subjected to annealing treatment. Incidentally, in the EPMA image, the portions seen white were supposed to be yttria.

(4) The number of free particles

The ceramic plate of each ceramic heater with a wafer put on an upper part thereof was vibrated by a vibration testing apparatus (F-1700BM -E47 manufactured by Shin Nippon Measurement Instrument Co.) to count the number of the free particles adhering to the wafer after the vibration, by an optical microscope.

Table 1

| | bending strength (MPa) | concentration ratio of yttria | the number of free particles (piece/cm$^2$) |
|---|---|---|---|
| Example 1 | 400 | 0.6 | 5 |
| Example 2 | 450 | 0.1 | 2 |
| Example 3 | 490 | 0.001 | 1 |
| Example 4 | 490 | - | 3 |
| Comparative Example 1 | 290 | 1.0 | 20 |
| Comparative Example 2 | 295 | - | 25 |

As being made clear from the results shown in Table 1, the ceramic substrates constituting hot plates according to Examples 1 to 4 had a bending strength of 400 to 500 MPa, whereas the ceramic substrates constituting hot plates according to Comparative Examples 1 and 2 had a bending strength of 290 MPa, manifesting inferiority.

Further, being made clear by comparison between Fig. 13 and Fig. 14, the ceramic substrates according to Examples had grains having round surface.

Further, the ceramic substrates according to Examples 1 to 3 had a low concentration ratio of yttria and a content of $Y_2O_3$ gradually increased toward the vicinity of the surface part. That was obvious from the fact that yttria was scarcely observed internally of the ceramic substrate and that yttria locally existed at triple points where grains were brought into contact with one another at the surface of the ceramic substrate on the basis of the electron microscopic photograph of the vicinity of the surface of the ceramic substrate shown in Fig. 15 to 17 and the electron microscopic photograph and EPMA image of the inner portion of the ceramic substrate. On the other hand, the ceramic substrate according to Comparative Example had a yttria concentration ratio of 1.0, that is, the concentration in the vicinity of the surface and the center part was same.

Further, the ceramic heaters according to Examples all had the number of free particles: 5 pieces or less/ cm$^2$, whereas the ceramic heaters according to Comparative Examples had the number of free particles: 20 pieces or more/cm$^2$.

As described above, since any ceramic substrate of the present invention was obtained by subjecting a primary sintered body which is obtained by firing a formed body to annealing treatment in the temperature condition of 1400°C to 1800°C, its bending strength was especially excellent and coming-off of particle also did not take place easily.

Industrial Applicability

As described above, a ceramic substrate and an aluminum nitride sintered body of the first aspect of the present invention had a bending strength as high as 400 MPa or more, so that even if the ceramic substrate is made to be a large size ceramic substrate capable of placing a semiconductor wafer with a large diameter thereon, cracks and damages attributed to the pushing pressure do not take place easily and coming-off of particle also do not takes place easily.

A ceramic substrate and an aluminum nitride sintered body of the second aspect of the present invention, wherein a grain composing the surface thereof has round shape. Such a ceramic substrate and aluminum nitride sintered body are generally subjected to annealing treatment at a temperature of 1400°C to 1800°C after production of a primary sintered body, so that they become a further dense structure body and are provided with improved mechanical characteristics such as the strength and therefore, even if pushing pressure is applied to the ceramic substrate, cracks and damages do not take place easily.

A ceramic substrate and an aluminum nitride sintered body of the third aspect of the present invention, wherein the ceramic substrate and aluminum nitride sintered body has a content of a rare earth element gradually increasing toward the vicinity of the surface part. Such a ceramic substrate and aluminum nitride sintered body are generally subjected to annealing treatment at a temperature of 1400°C to 1800°C after production of a primary sintered body, so that they become a further dense structure body and are provided with improved mechanical characteristics such as the strength and therefore, even if pushing pressure is applied to the ceramic substrate, cracks and damages do not take place easily.

Further, since a ceramic substrate manufacturing method of the present invention includes a step of subjecting a primary sintered body to the annealing treatment at a temperature of 1400°C to 1800°C after production of the primary sintered body by firing a formed body containing a ceramic powder, molecular movement (for example, volumetric diffusion) which promotes sintering in the primary sintered body is caused and at the same time the strains in the primary sintered body are moderated and consequently the manufactured ceramic substrate is provided with excellent mechanical characteristics such as bending strength and the like. Incidentally, the production method of aluminum nitride sintered body of the present invention is similar to the production method of a ceramic substrate, except that aluminum nitride is used as a ceramic powder, and the obtained effects are also similar.

**Claims**

1. A ceramic substrate having a conductor formed on a surface thereof, or internally thereof,
   wherein a bending strength thereof is 350 MPa or more.

2. A ceramic substrate having a conductor formed on a surface thereof, or internally thereof,
   wherein a grain composing the surface thereof has round shape.

3. A ceramic substrate having a conductor formed on a surface thereof, or internally thereof,
   wherein said ceramic substrate has a content of a rare earth element gradually increasing toward the vicinity of the surface part.

4. The ceramic substrate according to claim 3,
   wherein: said rare earth element is $Y_2O_3$; and
   said ceramic substrate, which is made of aluminum nitride has the bending strength of 400 MPa or more.

5. An aluminum nitride sintered body,
   wherein a bending strength thereof is 350 MPa or more.

6. An aluminum nitride sintered body,
   wherein a grain composing the surface thereof has round shape.

7. An aluminum nitride sintered body,
   wherein said aluminum nitride sintered body has a content of a rare earth element gradually increasing toward the vicinity of the surface part.

8. A method for manufacturing a ceramic substrate having a conductor formed on a surface thereof, or internally thereof, comprising the steps of:

   firing a formed body containing a ceramic powder to produce a primary sintered body; and
   performing an annealing process to said primary sintered body at a temperature of 1400°C to 1800°C, after the preceding step.

9. A method for manufacturing an aluminum nitride sintered body, comprising the steps of:

   firing a formed body containing an aluminum nitride powder to produce a primary sintered body; and
   performing an annealing process to said primary sintered body at a temperature of 1400°C to 1800°C, after the preceding step.

Fig. 1

Fig. 2

Fig. 3

Fig. 4

Fig. 5

(a)

(b)

Fig. 6

Fig. 7

80

82a

81

83a

83b

82b

Fig. 8

101

5 7 8 7 8 7 8 7 2 5

A

16

41 41 41 3 41 6

V

A

Fig. 9

Fig. 10

Fig. 11

(a)

11

14    15          15    14

(b)

11

12    14    15    12          15    14          12

(c)

11

12    14    15    12    12a    15    14    12a

(d)

18    14          18    14

11

130          12    15    12    12a    15    12a          130

13          13

Fig. 12

(a)

280      220      280

(b)

21

28

24   25   22   25   24   28

(c)

21

28

27   24   25   22   25   24   27   28

(d)

21

28

23   24   25   22   25   24   28   23

Fig. 13

(a)

(b)

Fig. 14

(a)

(b)

Fig. 15

## The inner portion of the ceramic substrate

Fig. 16

## The surface of the ceramic substrate

Fig. 17

The EPMA image of the ceramic substrate surface

## INTERNATIONAL SEARCH REPORT

| International application No. |
| --- |
| PCT/JP01/10255 |

A. CLASSIFICATION OF SUBJECT MATTER
Int.Cl⁷   C04B35/581

According to International Patent Classification (IPC) or to both national classification and IPC

B. FIELDS SEARCHED

Minimum documentation searched (classification system followed by classification symbols)
Int.Cl⁷   C04B35/581~35/582, H05K1/03, H01L23/15

Documentation searched other than minimum documentation to the extent that such documents are included in the fields searched

| | | | |
| --- | --- | --- | --- |
| Jitsuyo Shinan Koho | 1926-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | EP 913371 A2 (Sumitomo Electric Industries, Ltd.), 06 May, 1999 (06.05.1999), table 2 & JP 11-278941 A table 2 & US 6174614 A | 1-7 |
| X | EP 955279 A1 (Sumitomo Electric Industries, Ltd.), 10 November, 1999 (10.11.1999), Claim 2 & JP 2000-53470 A Claim 2 | 1-7 |
| X | JP 2000-315844 A (Toshiba Corporation), 14 November, 2000 (14.11.2000), table 1   (Family: none) | 1-7 |
| X | JP 2000-226261 A (Fuji Electric Co., Ltd.), 15 August, 2000 (15.08.2000), table 1   (Family: none) | 1-7 |

☒ Further documents are listed in the continuation of Box C.      ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 28 January, 2002 (28.01.02) | 05 February, 2002 (05.02.02) |

| Name and mailing address of the ISA/ | Authorized officer |
| --- | --- |
| Japanese Patent Office | |
| Facsimile No. | Telephone No. |

Form PCT/ISA/210 (second sheet) (July 1992)

## INTERNATIONAL SEARCH REPORT

| International application No. |
| --- |
| PCT/JP01/10255 |

C (Continuation). DOCUMENTS CONSIDERED TO BE RELEVANT

| Category* | Citation of document, with indication, where appropriate, of the relevant passages | Relevant to claim No. |
| --- | --- | --- |
| X | JP 2000-178072 A (Kyocera Corporation), 27 June, 2000 (27.06.2000), Claim 1 (Family: none) | 1-7 |
| X | JP 10-310475 A (Denki Kagaku Kogyo K.K.), 24 November, 1998 (24.11.1998), Claim 1 (Family: none) | 1-7 |
| X Y | JP 4-275982 A (Shin-Etsu Chemical Co., Ltd.), 01 October, 1992 (01.10.1992), Par. Nos. [0003], [0006] (Family: none) | 9 8 |

Form PCT/ISA/210 (continuation of second sheet) (July 1992)